# EUROPEAN PATENT APPLICATION

(11) **EP 4 750 039 A1**
(43) Date of publication of application: **27.05.2026**
(21) Application number: 25217992.4
(22) Date of filing: 24.11.2025
(51) Int. Cl.: H04L 69/22

(54) **IN-NETWORK COMPUTING USING UPF ENHANCEMENT WITH EXPOSURE IN NEXT GENERATION CELLULAR NETWORKS**

(30) Priority: 25.11.2024 US 202463724831 P
(71) Applicant: INTEL Corporation, Santa Clara, CA 95054 (US)
(72) Inventor: DING, Zongrui, Portland (US); LI, Qian, Portland, OR 97229 (US); STOJANOVSKI, Alexandre Saso, 75 Paris (FR); TONG, Xiaopeng, Beijing, 11 100090 (CN)
(74) Representative: Viering, Jentschura & Partner mbB Patent- und Rechtsanwälte

(57) **Abstract**

An apparatus for a user equipment, UE, the apparatus may include processing circuitry coupled to a storage, the processing circuitry configured to: generate a header or tag for attachment to a user plane, UP, data packet for in-network computing, wherein the header or tag comprises an operating mode information element representing whether the header or tag is independent of the UP data packet or not; and instruct the UE to transmit data comprising the header or tag attached to the UP data packet.

## Description

### CROSS-REFERENCE TO RELATED APPLICATIONS

This application claims priority to United States Provisional Application No. 63/724,831 filed on November 25, 2024.

### BACKGROUND

Various embodiments generally may relate to the field of wireless communications.

### BRIEF DESCRIPTION OF FIGURES

The drawings are not necessarily to scale, emphasis instead generally being placed upon illustrating the principles of the disclosure. In the following description, various aspects of the disclosure are described with reference to the following drawings, in which:
Figure 1 shows an example illustration of Nnef_TrafficInfluence Operation;
Figure 2 shows an example of a service discovery header/tag format;
Figure 3 shows an example of a compute service request header/tag format;
Figure 4 shows an example measurement configuration request header/tag format;
Figure 5 shows an example of a measurement request header/tag format;
Figure 6 illustrates a network 600 in accordance with various embodiments;
Figure 7 schematically illustrates a wireless network 700 in accordance with various embodiments;
Figure 8 is a block diagram illustrating components, according to some example embodiments;
Figure 9 illustrates a network 900 in accordance with various embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrases "A or B" and "A/B" mean (A), (B), or (A and B).

In the third generation partnership project (3GPP) release-19 (rel-19) work item (WI) FS_UPEAS_Ph2 (SP-231795), further enhancements for user plane function (UPF) exposure and service-based architecture (SBA) are studied and the results captured in [1]. The key issue #3 (solution 1) is Study enhancements for UPF handling of headers which studies that the application function (AF) could configure the UPF about header handling based on a service-level agreement (SLA) to add, delete, process headers/tags in the user plane (UP) and then send notifications to the configured uniform resource identifier (URI) leveraging different interfaces. The mechanism to configure the UPF exposure capabilities are standardized. But the header is not specified and based on SLA to be used for different purposes. Example input parameters are listed in Table 1 [1].

**Table 1 Input parameters from AF to configure UPF exposure**

| **Input parameters from AF** | | |
|---|---|---|
| Header/Tag information (NOTE 3) | Identifier | Example: tagID (1) pointing to preconfigured Tag Type= RAT and Tag Value to be included by 5GC nodes |
| | Tag Type + Tag Value | Example: Tag Type=FQDN, Tag Value=domain.com |
| Header/Tag Actions | Action | Values: Insert, Detect, Remove, Replace |
| | Condition | Values: Always, at initiation, during certain period |
| | Direction | Values: UL, DL |
| Header/Tag Handling Instructions | Reference | Example: rulelD (1) pointing to preconfigured information in UPF for protocol info, encryption handling, etc |
| | Additional Data | Non-standard info used by AF to complement the preconfigured rulelD |
| Reporting Instructions (NOTE 1) | Type of report | Values: Direct, Indirect, No report |
| | Condition for reporting | Values: Threshold based, Periodical with periodicity, etc |
| | Reporting correlation identifier | Correlation ID |
| | Reporting-to address | UPF event consumer URI |

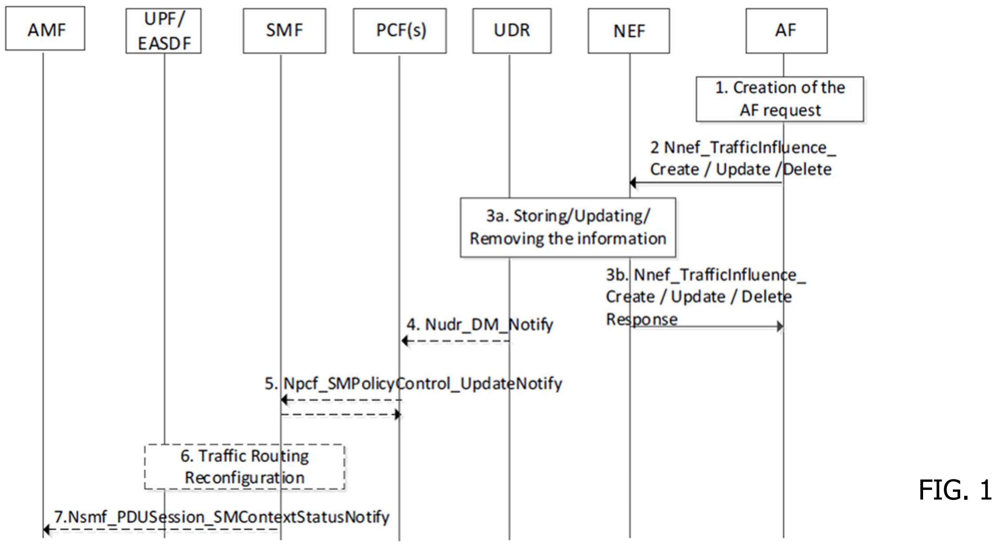

The network exposure function (NEF) Nnef_TrafficInfluence operation can be reused to allow AF to configure UPF via the session management function (SMF) and get notified if an interested event happens as shown in Figure 1. Figure 1 shows an example illustration of Nnef_TrafficInfluence Operation (clause 4.3.6.2 of TS 23 502 [2]). Note that this applies to both current or future packet data nit (PDU) sessions.

In sixth generation (6G) computing scenarios, the user equipment (UE) and/or AF could leverage these mechanisms to facilitate in-network computing with a standardized header/tag. In legacy fifth generation (5G) networks, the edge application server discovery function (EASDF) serves as a domain name system (DNS) resolver and work with SMF to modify DNS requests and responses for EAS discovery. In embodiments herein, additional header(s) and/or tag(s) may be leveraged to facilitate computing services with different granularities.

It will be understood that, in some embodiments, the UPF handling of header/tag may be based on the SLA, rather than specified by 3GPP.

Embodiments herein may relate to scenarios such as explicit congestion notification (ECN) handling to detect congestion or service function chaining after N6, which may not be able to solve the in-network computing problem. The header/tag format described herein may be used between the UE and the user plane function (UPF) for various purposes such as service discovery, service request, measurement configuration and measurement reporting.

The cloudification of the Telco network may result in high demand for computing.

### Example Headers for Computing Services

To enable computing services in 6G using the header/tag as described in rel-19 for UPF exposure, new headers and header handling rules need to be defined and configured between UE, NW nodes such as UPF, EASDF, etc. and AF. An example of the computing header information elements are described in Table 2. Compared to Table 1, this table introduces different information elements (IEs) especially which can be included in different header formats. The header formats include the following but not limited to:
- Service discovery request/response
- Computing service request/response
- Measurement configuration request/response
- Measurement report request/response

Each of these header formats can include one or more IEs described in Table 2. Compared to Table 1 above, new information in the computing header information element includes one or a combination of the following, which are further described in Table 2:
- "Header format information" and its corresponding "ID";
- "Header/Tag Operating Mode" and its corresponding "Mode";
- "Security Key" and its corresponding "ID";
- "Condition" under "Header/Tag Actions";
- "Reference" under "Header/Tag Handling Instructions";
- "Additional Data" under "Header/Tag Handling Instructions";
- "Packet group ID" under "Header/Tag Handling Instructions".

Note that some information in Table 2 could be configured in Table 1 via AF to NEF/SMF/UPF. However, the header/tag is for use with a UP data packet.

**Table 2: Computing header information**

| **Computing header information element** | | |
|---|---|---|
| Header format information | ID | Example: Computing service request coded as 0010 and Computing service response coded as 0011 |
| Header/Tag information | Identifier | Example: TagID can be Tag Type + Tag Value; |
| | Tag Type + Tag Value | Example: Tag Type=FQDN, Tag Value=domain.com |
| Header/Tag Operating Mode | Mode [Note 1] | Example: Dependent or Independent |
| Security Key | ID | Example: UE ID or assigned keys for authorization and security |
| Header/Tag Actions | Action | Values: Insert, Detect, Remove, Replace |
| | Condition | Values: Always, Applied to current packet; Applied to the subsequent X number of packets; |
| | Direction | Values: UL, DL |
| Header/Tag Handling Instructions | Reference | Example: Packet routing function end points information, e.g., EASDF end points information |
| | Additional Data | Example: Metadata on how to handle the header and how to handle the UP packet or subsequent packets, e.g., pointing to new FAR rules or specific service function or computing function. Metadata can also include the computing requirements about HW/SW, QoS, etc. |
| | Packet group ID | Packet group: the header/tag applies to a group of the UP packets that may be identified by a sequence number |
| Reporting Instructions | Type of report | Values: Direct, Indirect, No report |
| | Condition for reporting | Values: Threshold based, Periodical with periodicity, etc |
| | Reporting correlation identifier | Correlation ID |
| | Reporting-to address | UPF event consumer URI |

The header/tag may be applied to current or future PDU sessions. For a future PDU session, the PCF shall generate related policy and notify the SMF during the PDU session setup stage to bind the policy and configure related rules in the UPF.

### [Note 1]: There are two processing modes:

### • Independent Header/tag with UP packets

In the independent mode, the header/tag is independent of the UP packets that they are attached to. The UP packets serves as the carriers for the header/tag to the desired network (NW) nodes such as an I-UPF or UPF. The processing NW node such as a UPF shall remove the header/tag from the UP packet and process the UP packet based on the rules configured in the UPF, e.g., FAR. No further processing required for the UP packet after the header/tag is processed.

### • Dependent Header/tag with UP packets

In the dependent mode, the header/tag would indicate additional processing to the UP packet that it is attached to. Therefore, the UPF shall process the header/tag and perform additional operations on the data packet. For example, the UPF can process the header/tag and decide to forward the UP packet to a route that is indicated in the header/tag.

### Example Procedures for In-Network Computing

For all the following procedures, a security key may be applied to authorize the request/response. Specifically, the UE identifiers (IDs) may be included to be verified at the middle point such as a UPF against the traffic rules configured by the SMF.

### Examples of Service Discovery

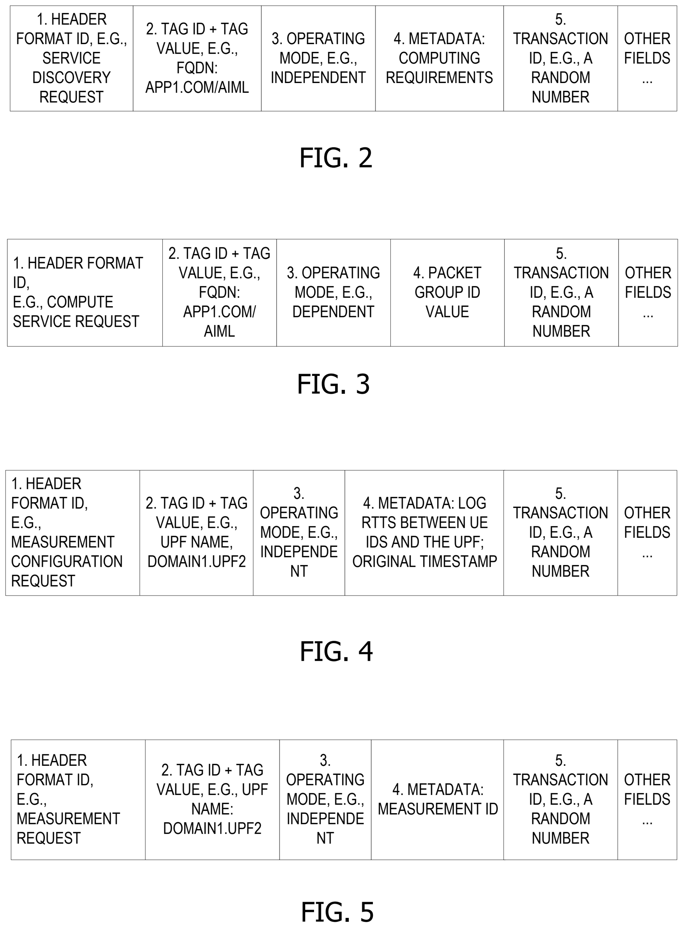

The service discovery header is recognized between the UE and a processing node which can be UPF, intermediate UPF (I-UPF), other branching points like centralized unit (CU)-UP. The UE may want to discover service based on a fully qualified domain name (FQDN) with additional computing requirements such as on hardware or software (HW or SW), quality of service (QoS), location, etc. The details can refer to computing manifest in [3]. An example header format is shown in Figure 2. Figure 2 shows an example of a service discovery header/tag format. In this Figure:
1. The header format ID indicates it is a service discovery request. When the header arrives at the UPF or I-UPF or other intermediate nodes that are configured to check the header/tag. The processing node shall process or forward the header to the functions that can give a service discovery response, e.g., an EASDF.
2. The Tag ID and value indicates the service discovery is by a FQDN to discovery app1.com/aiml.
3. The operating mode indicates that the header is in independent mode, thus, the processing node shall process or forward the header based on the configured rule and process the data packet that carries the header based on the original rules, e.g., IP address matching. In this case, the service discovery header only uses the data packet as a vehicle to reach the processing node.
4. The metadata includes the computing or QoS requirements as described in [3] to filter the computing services.
5. The transaction ID is used to identify the request/response pair. After the processing node gets a response from the service discovery function, e.g., EASDF, a response shall be generated and attach to qualified data packet towards the UE.

This mechanism allows the header to take flexible format with less impact on a legacy control plane (CP) and/or UP.

### Example of Computing Service Request

The computing service request/response may be used between computing service requester, e.g., a UE and a processing node, e.g., UPF to manipulate the data packets based on configuration to forward the packets to the computing services. Figure 3 shows an example of a compute service request header/tag format. In this Figure:
1. The header format indicates the header is for computing service request.
2. The Tag ID and value indicates the target service is FQDN app1.com/aiml.
3. The operating mode is dependent meaning that the header contains the rules about how to process the data packet, e.g., forward to the request service.
4. The packet group ID further indicates that the instructions in the header are applicable to subsequent packets that carries the same group ID.
5. The transaction ID identifies the service request and referred by the computing service response.

In case of applying this header to a group of packets, the following packets may carry a simple header which includes the packet group ID as the header with the same transaction ID.

### Example of Measurements Configuration

The measurement configuration request/response is used to configure what to collect at a middle point node such as a UPF. The middle point could follow the instructions in the measurement configuration request and send a response to the requestor about the collected measurements. The example header/tag is shown in Figure 4. Figure 4 shows an example measurement configuration request header/tag format. In this Figure:
1. The header format ID indicates the header is to configure measurement configuration.
2. The Tag ID and value indicates the UPF's name that should be configured and respond to this message is domain1.upf2.
3. The operating mode is independent meaning that the data packet carries the request will be processed as the rules configured for these packets independently of the header/tag.
4. The metadata contains the original time stamp and the UE IDs or flow IDs that the UPF shall measure. The UE ID can be IP addresses or other identifiers like a global unique temporary identifier (GUTI). A measure frequency can be included to indicate whether this measurements are collected once or periodically.
5. The transaction ID identifies the service request and referred by the computing service response.

In the measurement configuration response, a measurement ID may be allocated and sent to the requestor. Available measurements can also be sent in the metadata field.

### 5.1.1.2 Measurements reporting

Measurements report request/response is used to request measurements by measurement ID. Figure 5 shows an example of a measurement request header/tag format.
1. The header format ID indicates the header is to request measurement report.
2. The Tag ID and value indicates the UPF's name that should be configured and respond to this message is domain1.upf2.
3. The operating mode is independent meaning that the data packet carries the request will be processed as the rules configured for these packets independently of the header/tag
4. The metadata contains the assigned measurement ID assigned
5. The transaction ID identifies the service request and referred by the computing service response

### References

[1] 3GPP TR 23.700-63 "Study on UPF enhancement for Exposure and SBA; Phase 2"
[2] 3GPP TS 23.502, "System architecture for the 5G System (5GS), Stage 2"
[3] AD1126-Z "CAPABILITY MANIFEST DEFINITION FOR COMPUTE OFFLOAD SERVICES"

### SYSTEMS AND IMPLEMENTATIONS

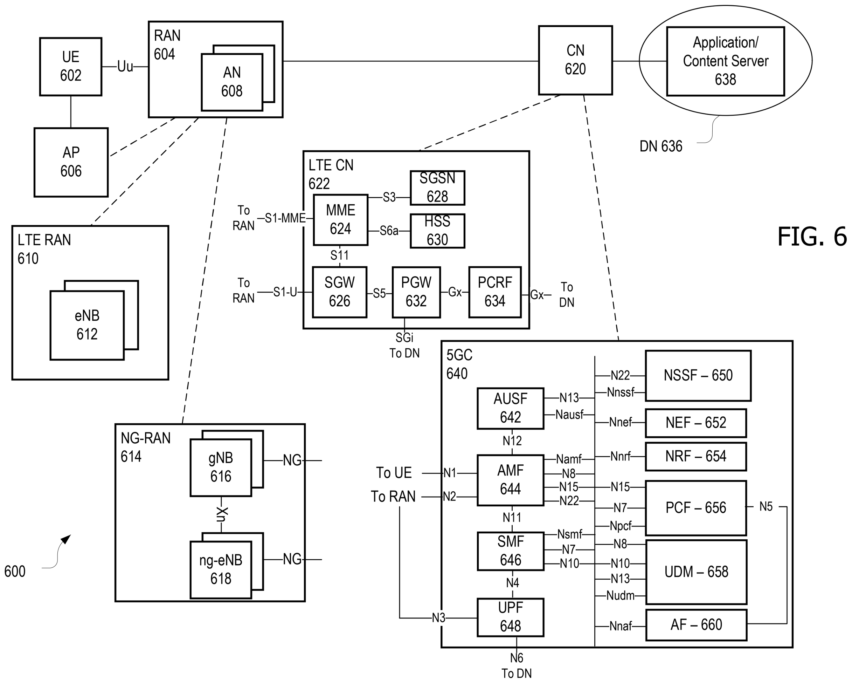

Figures 6-9 illustrate various systems, devices, and components that may implement aspects of disclosed embodiments.

Figure 6 illustrates a network 600 in accordance with various embodiments. The network 600 may operate in a manner consistent with 3GPP technical specifications for LTE or 5G/NR systems. However, the example embodiments are not limited in this regard and the described embodiments may apply to other networks that benefit from the principles described herein, such as future 3GPP systems, or the like.

The network 600 may include a UE 602, which may include any mobile or non-mobile computing device designed to communicate with a RAN 604 via an over-the-air connection. The UE 602 may be communicatively coupled with the RAN 604 by a Uu interface. The UE 602 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

In some embodiments, the network 600 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc.

In some embodiments, the UE 602 may additionally communicate with an AP 606 via an over-the-air connection. The AP 606 may manage a WLAN connection, which may serve to offload some/all network traffic from the RAN 604. The connection between the UE 602 and the AP 606 may be consistent with any IEEE 802.11 protocol, wherein the AP 606 could be a wireless fidelity (Wi-Fi^{®}) router. In some embodiments, the UE 602, RAN 604, and AP 606 may utilize cellular-WLAN aggregation (for example, LWA/LWIP). Cellular-WLAN aggregation may involve the UE 602 being configured by the RAN 604 to utilize both cellular radio resources and WLAN resources.

The RAN 604 may include one or more access nodes, for example, AN 608. AN 608 may terminate air-interface protocols for the UE 602 by providing access stratum protocols including RRC, PDCP, RLC, MAC, and L1 protocols. In this manner, the AN 608 may enable data/voice connectivity between CN 620 and the UE 602. In some embodiments, the AN 608 may be implemented in a discrete device or as one or more software entities running on server computers as part of, for example, a virtual network, which may be referred to as a CRAN or virtual baseband unit pool. The AN 608 be referred to as a BS, gNB, RAN node, eNB, ng-eNB, NodeB, RSU, TRxP, TRP, etc. The AN 608 may be a macrocell base station or a low power base station for providing femtocells, picocells or other like cells having smaller coverage areas, smaller user capacity, or higher bandwidth compared to macrocells.

In embodiments in which the RAN 604 includes a plurality of ANs, they may be coupled with one another via an X2 interface (if the RAN 604 is an LTE RAN) or an Xn interface (if the RAN 604 is a 5G RAN). The X2/Xn interfaces, which may be separated into control/user plane interfaces in some embodiments, may allow the ANs to communicate information related to handovers, data/context transfers, mobility, load management, interference coordination, etc.

The ANs of the RAN 604 may each manage one or more cells, cell groups, component carriers, etc. to provide the UE 602 with an air interface for network access. The UE 602 may be simultaneously connected with a plurality of cells provided by the same or different ANs of the RAN 604. For example, the UE 602 and RAN 604 may use carrier aggregation to allow the UE 602 to connect with a plurality of component carriers, each corresponding to a Pcell or Scell. In dual connectivity scenarios, a first AN may be a master node that provides an MCG and a second AN may be secondary node that provides an SCG. The first/second ANs may be any combination of eNB, gNB, ng-eNB, etc.

The RAN 604 may provide the air interface over a licensed spectrum or an unlicensed spectrum. To operate in the unlicensed spectrum, the nodes may use LAA, eLAA, and/or feLAA mechanisms based on CA technology with PCells/Scells. Prior to accessing the unlicensed spectrum, the nodes may perform medium/carrier-sensing operations based on, for example, a listen-before-talk (LBT) protocol.

In V2X scenarios the UE 602 or AN 608 may be or act as a RSU, which may refer to any transportation infrastructure entity used for V2X communications. An RSU may be implemented in or by a suitable AN or a stationary (or relatively stationary) UE. An RSU implemented in or by: a UE may be referred to as a "UE-type RSU"; an eNB may be referred to as an "eNB-type RSU"; a gNB may be referred to as a "gNB-type RSU"; and the like. In one example, an RSU is a computing device coupled with radio frequency circuitry located on a roadside that provides connectivity support to passing vehicle UEs. The RSU may also include internal data storage circuitry to store intersection map geometry, traffic statistics, media, as well as applications/software to sense and control ongoing vehicular and pedestrian traffic. The RSU may provide very low latency communications required for high speed events, such as crash avoidance, traffic warnings, and the like. Additionally or alternatively, the RSU may provide other cellular/WLAN communications services. The components of the RSU may be packaged in a weatherproof enclosure suitable for outdoor installation, and may include a network interface controller to provide a wired connection (e.g., Ethernet) to a traffic signal controller or a backhaul network.

In some embodiments, the RAN 604 may be an LTE RAN 610 with eNBs, for example, eNB 612. The LTE RAN 610 may provide an LTE air interface with the following characteristics: SCS of 15 kHz; CP-OFDM waveform for DL and SC-FDMA waveform for UL; turbo codes for data and TBCC for control; etc. The LTE air interface may rely on CSI-RS for CSI acquisition and beam management; PDSCH/PDCCH DMRS for PDSCH/PDCCH demodulation; and CRS for cell search and initial acquisition, channel quality measurements, and channel estimation for coherent demodulation/detection at the UE. The LTE air interface may operating on sub-6 GHz bands.

In some embodiments, the RAN 604 may be an NG-RAN 614 with gNBs, for example, gNB 616, or ng-eNBs, for example, ng-eNB 618. The gNB 616 may connect with 5G-enabled UEs using a 5G NR interface. The gNB 616 may connect with a 5G core through an NG interface, which may include an N2 interface or an N3 interface. The ng-eNB 618 may also connect with the 5G core through an NG interface, but may connect with a UE via an LTE air interface. The gNB 616 and the ng-eNB 618 may connect with each other over an Xn interface.

In some embodiments, the NG interface may be split into two parts, an NG user plane (NG-U) interface, which carries traffic data between the nodes of the NG-RAN 614 and a UPF 648 (e.g., N3 interface), and an NG control plane (NG-C) interface, which is a signaling interface between the nodes of the NG-RAN614 and an AMF 644 (e.g., N2 interface).

The NG-RAN 614 may provide a 5G-NR air interface with the following characteristics: variable SCS; CP-OFDM for DL, CP-OFDM and DFT-s-OFDM for UL; polar, repetition, simplex, and Reed-Muller codes for control and LDPC for data. The 5G-NR air interface may rely on CSI-RS, PDSCH/PDCCH DMRS similar to the LTE air interface. The 5G-NR air interface may not use a CRS, but may use PBCH DMRS for PBCH demodulation; PTRS for phase tracking for PDSCH; and tracking reference signal for time tracking. The 5G-NR air interface may operating on FR1 bands that include sub-6 GHz bands or FR2 bands that include bands from 24.25 GHz to 52.6 GHz. The 5G-NR air interface may include an SSB that is an area of a downlink resource grid that includes PSS/SSS/PBCH.

In some embodiments, the 5G-NR air interface may utilize BWPs for various purposes. For example, BWP can be used for dynamic adaptation of the SCS. For example, the UE 602 can be configured with multiple BWPs where each BWP configuration has a different SCS. When a BWP change is indicated to the UE 602, the SCS of the transmission is changed as well. Another use case example of BWP is related to power saving. In particular, multiple BWPs can be configured for the UE 602 with different amount of frequency resources (for example, PRBs) to support data transmission under different traffic loading scenarios. A BWP containing a smaller number of PRBs can be used for data transmission with small traffic load while allowing power saving at the UE 602 and in some cases at the gNB 616. A BWP containing a larger number of PRBs can be used for scenarios with higher traffic load.

The RAN 604 is communicatively coupled to CN 620 that includes network elements to provide various functions to support data and telecommunications services to customers/subscribers (for example, users of UE 602). The components of the CN 620 may be implemented in one physical node or separate physical nodes. In some embodiments, NFV may be utilized to virtualize any or all of the functions provided by the network elements of the CN 620 onto physical compute/storage resources in servers, switches, etc. A logical instantiation of the CN 620 may be referred to as a network slice, and a logical instantiation of a portion of the CN 620 may be referred to as a network sub-slice.

In some embodiments, the CN 620 may be an LTE CN 622, which may also be referred to as an EPC. The LTE CN 622 may include MME 624, SGW 626, SGSN 628, HSS 630, PGW 632, and PCRF 634 coupled with one another over interfaces (or "reference points") as shown. Functions of the elements of the LTE CN 622 may be briefly introduced as follows.

The MME 624 may implement mobility management functions to track a current location of the UE 602 to facilitate paging, bearer activation/deactivation, handovers, gateway selection, authentication, etc.

The SGW 626 may terminate an S1 interface toward the RAN and route data packets between the RAN and the LTE CN 622. The SGW 626 may be a local mobility anchor point for inter-RAN node handovers and also may provide an anchor for inter-3GPP mobility. Other responsibilities may include lawful intercept, charging, and some policy enforcement.

The SGSN 628 may track a location of the UE 602 and perform security functions and access control. In addition, the SGSN 628 may perform inter-EPC node signaling for mobility between different RAT networks; PDN and S-GW selection as specified by MME 624; MME selection for handovers; etc. The S3 reference point between the MME 624 and the SGSN 628 may enable user and bearer information exchange for inter-3GPP access network mobility in idle/active states.

The HSS 630 may include a database for network users, including subscription-related information to support the network entities' handling of communication sessions. The HSS 630 can provide support for routing/roaming, authentication, authorization, naming/addressing resolution, location dependencies, etc. An S6a reference point between the HSS 630 and the MME 624 may enable transfer of subscription and authentication data for authenticating/authorizing user access to the LTE CN 620.

The PGW 632 may terminate an SGi interface toward a data network (DN) 636 that may include an application/content server 638. The PGW 632 may route data packets between the LTE CN 622 and the data network 636. The PGW 632 may be coupled with the SGW 626 by an S5 reference point to facilitate user plane tunneling and tunnel management. The PGW 632 may further include a node for policy enforcement and charging data collection (for example, PCEF). Additionally, the SGi reference point between the PGW 632 and the data network 6 36 may be an operator external public, a private PDN, or an intra-operator packet data network, for example, for provision of IMS services. The PGW 632 may be coupled with a PCRF 634 via a Gx reference point.

The PCRF 634 is the policy and charging control element of the LTE CN 622. The PCRF 634 may be communicatively coupled to the app/content server 638 to determine appropriate QoS and charging parameters for service flows. The PCRF 632 may provision associated rules into a PCEF (via Gx reference point) with appropriate TFT and QCI.

In some embodiments, the CN 620 may be a 5GC 640. The 5GC 640 may include an AUSF 642, AMF 644, SMF 646, UPF 648, NSSF 650, NEF 652, NRF 654, PCF 656, UDM 658, and AF 660 coupled with one another over interfaces (or "reference points") as shown. Functions of the elements of the 5GC 640 may be briefly introduced as follows.

The AUSF 642 may store data for authentication of UE 602 and handle authentication-related functionality. The AUSF 642 may facilitate a common authentication framework for various access types. In addition to communicating with other elements of the 5GC 640 over reference points as shown, the AUSF 642 may exhibit an Nausf service-based interface.

The AMF 644 may allow other functions of the 5GC 640 to communicate with the UE 602 and the RAN 604 and to subscribe to notifications about mobility events with respect to the UE 602. The AMF 644 may be responsible for registration management (for example, for registering UE 602), connection management, reachability management, mobility management, lawful interception of AMF-related events, and access authentication and authorization. The AMF 644 may provide transport for SM messages between the UE 602 and the SMF 646, and act as a transparent proxy for routing SM messages. AMF 644 may also provide transport for SMS messages between UE 602 and an SMSF. AMF 644 may interact with the AUSF 642 and the UE 602 to perform various security anchor and context management functions. Furthermore, AMF 644 may be a termination point of a RAN CP interface, which may include or be an N2 reference point between the RAN 604 and the AMF 644; and the AMF 644 may be a termination point of NAS (N1) signaling, and perform NAS ciphering and integrity protection. AMF 644 may also support NAS signaling with the UE 602 over an N3 IWF interface.

The SMF 646 may be responsible for SM (for example, session establishment, tunnel management between UPF 648 and AN 608); UE IP address allocation and management (including optional authorization); selection and control of UP function; configuring traffic steering at UPF 648 to route traffic to proper destination; termination of interfaces toward policy control functions; controlling part of policy enforcement, charging, and QoS; lawful intercept (for SM events and interface to LI system); termination of SM parts of NAS messages; downlink data notification; initiating AN specific SM information, sent via AMF 644 over N2 to AN 608; and determining SSC mode of a session. SM may refer to management of a PDU session, and a PDU session or "session" may refer to a PDU connectivity service that provides or enables the exchange of PDUs between the UE 602 and the data network 636.

The UPF 648 may act as an anchor point for intra-RAT and inter-RAT mobility, an external PDU session point of interconnect to data network 636, and a branching point to support multi-homed PDU session. The UPF 648 may also perform packet routing and forwarding, perform packet inspection, enforce the user plane part of policy rules, lawfully intercept packets (UP collection), perform traffic usage reporting, perform QoS handling for a user plane (e.g., packet filtering, gating, UL/DL rate enforcement), perform uplink traffic verification (e.g., SDF-to-QoS flow mapping), transport level packet marking in the uplink and downlink, and perform downlink packet buffering and downlink data notification triggering. UPF 648 may include an uplink classifier to support routing traffic flows to a data network.

The NSSF 650 may select a set of network slice instances serving the UE 602. The NSSF 650 may also determine allowed NSSAI and the mapping to the subscribed S-NSSAIs, if needed. The NSSF 650 may also determine the AMF set to be used to serve the UE 602, or a list of candidate AMFs based on a suitable configuration and possibly by querying the NRF 654. The selection of a set of network slice instances for the UE 602 may be triggered by the AMF 644 with which the UE 602 is registered by interacting with the NSSF 650, which may lead to a change of AMF. The NSSF 650 may interact with the AMF 644 via an N22 reference point; and may communicate with another NSSF in a visited network via an N31 reference point (not shown). Additionally, the NSSF 650 may exhibit an Nnssf service-based interface.

The NEF 652 may securely expose services and capabilities provided by 3GPP network functions for third party, internal exposure/re-exposure, AFs (e.g., AF 660), edge computing or fog computing systems, etc. In such embodiments, the NEF 652 may authenticate, authorize, or throttle the AFs. NEF 652 may also translate information exchanged with the AF 660 and information exchanged with internal network functions. For example, the NEF 652 may translate between an AF-Service-Identifier and an internal 5GC information. NEF 652 may also receive information from other NFs based on exposed capabilities of other NFs. This information may be stored at the NEF 652 as structured data, or at a data storage NF using standardized interfaces. The stored information can then be re-exposed by the NEF 652 to other NFs and AFs, or used for other purposes such as analytics. Additionally, the NEF 652 may exhibit an Nnef service-based interface.

The NRF 654 may support service discovery functions, receive NF discovery requests from NF instances, and provide the information of the discovered NF instances to the NF instances. NRF 654 also maintains information of available NF instances and their supported services. As used herein, the terms "instantiate," "instantiation," and the like may refer to the creation of an instance, and an "instance" may refer to a concrete occurrence of an object, which may occur, for example, during execution of program code. Additionally, the NRF 654 may exhibit the Nnrf service-based interface.

The PCF 656 may provide policy rules to control plane functions to enforce them, and may also support unified policy framework to govern network behavior. The PCF 656 may also implement a front end to access subscription information relevant for policy decisions in a UDR of the UDM 658. In addition to communicating with functions over reference points as shown, the PCF 656 exhibit an Npcf service-based interface.

The UDM 658 may handle subscription-related information to support the network entities' handling of communication sessions, and may store subscription data of UE 602. For example, subscription data may be communicated via an N8 reference point between the UDM 658 and the AMF 644. The UDM 658 may include two parts, an application front end and a UDR. The UDR may store subscription data and policy data for the UDM 658 and the PCF 656, and/or structured data for exposure and application data (including PFDs for application detection, application request information for multiple UEs 602) for the NEF 652. The Nudr service-based interface may be exhibited by the UDR 221 to allow the UDM 658, PCF 656, and NEF 652 to access a particular set of the stored data, as well as to read, update (e.g., add, modify), delete, and subscribe to notification of relevant data changes in the UDR. The UDM may include a UDM-FE, which is in charge of processing credentials, location management, subscription management and so on. Several different front ends may serve the same user in different transactions. The UDM-FE accesses subscription information stored in the UDR and performs authentication credential processing, user identification handling, access authorization, registration/mobility management, and subscription management. In addition to communicating with other NFs over reference points as shown, the UDM 658 may exhibit the Nudm service-based interface.

The AF 660 may provide application influence on traffic routing, provide access to NEF, and interact with the policy framework for policy control.

In some embodiments, the 5GC 640 may enable edge computing by selecting operator/3^{rd} party services to be geographically close to a point that the UE 602 is attached to the network. This may reduce latency and load on the network. To provide edge-computing implementations, the 5GC 640 may select a UPF 648 close to the UE 602 and execute traffic steering from the UPF 648 to data network 636 via the N6 interface. This may be based on the UE subscription data, UE location, and information provided by the AF 660. In this way, the AF 660 may influence UPF (re)selection and traffic routing. Based on operator deployment, when AF 660 is considered to be a trusted entity, the network operator may permit AF 660 to interact directly with relevant NFs. Additionally, the AF 660 may exhibit an Naf service-based interface.

The data network 636 may represent various network operator services, Internet access, or third party services that may be provided by one or more servers including, for example, application/content server 638.

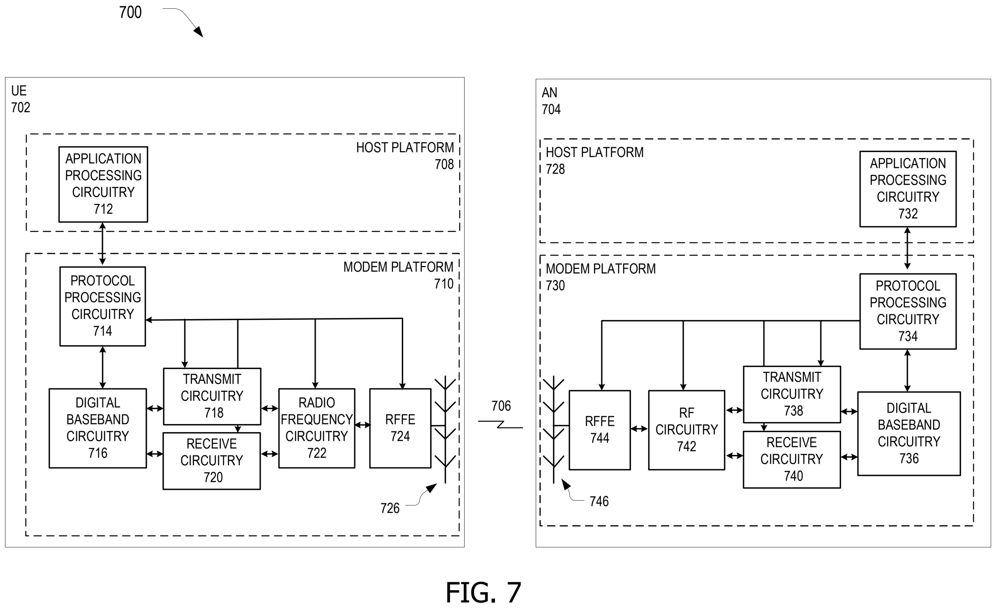

Figure 7 schematically illustrates a wireless network 700 in accordance with various embodiments. The wireless network 700 may include a UE 702 in wireless communication with an AN 704. The UE 702 and AN 704 may be similar to, and substantially interchangeable with, like-named components described elsewhere herein.

The UE 702 may be communicatively coupled with the AN 704 via connection 706. The connection 706 is illustrated as an air interface to enable communicative coupling, and can be consistent with cellular communications protocols such as an LTE protocol or a 5G NR protocol operating at mmWave or sub-6GHz frequencies.

The UE 702 may include a host platform 708 coupled with a modem platform 710. The host platform 708 may include application processing circuitry 712, which may be coupled with protocol processing circuitry 714 of the modem platform 710. The application processing circuitry 712 may run various applications for the UE 702 that source/sink application data. The application processing circuitry 712 may further implement one or more layer operations to transmit/receive application data to/from a data network. These layer operations may include transport (for example UDP) and Internet (for example, IP) operations

The protocol processing circuitry 714 may implement one or more of layer operations to facilitate transmission or reception of data over the connection 706. The layer operations implemented by the protocol processing circuitry 714 may include, for example, MAC, RLC, PDCP, RRC and NAS operations.

The modem platform 710 may further include digital baseband circuitry 716 that may implement one or more layer operations that are "below" layer operations performed by the protocol processing circuitry 714 in a network protocol stack. These operations may include, for example, PHY operations including one or more of HARQ-ACK functions, scrambling/descrambling, encoding/decoding, layer mapping/de-mapping, modulation symbol mapping, received symbol/bit metric determination, multi-antenna port precoding/decoding, which may include one or more of space-time, space-frequency or spatial coding, reference signal generation/detection, preamble sequence generation and/or decoding, synchronization sequence generation/detection, control channel signal blind decoding, and other related functions.

The modem platform 710 may further include transmit circuitry 718, receive circuitry 720, RF circuitry 722, and RF front end (RFFE) 724, which may include or connect to one or more antenna panels 726. Briefly, the transmit circuitry 718 may include a digital-to-analog converter, mixer, intermediate frequency (IF) components, etc.; the receive circuitry 720 may include an analog-to-digital converter, mixer, IF components, etc.; the RF circuitry 722 may include a low-noise amplifier, a power amplifier, power tracking components, etc.; RFFE 724 may include filters (for example, surface/bulk acoustic wave filters), switches, antenna tuners, beamforming components (for example, phase-array antenna components), etc. The selection and arrangement of the components of the transmit circuitry 718, receive circuitry 720, RF circuitry 722, RFFE 724, and antenna panels 726 (referred generically as "transmit/receive components") may be specific to details of a specific implementation such as, for example, whether communication is TDM or FDM, in mmWave or sub-6 gHz frequencies, etc. In some embodiments, the transmit/receive components may be arranged in multiple parallel transmit/receive chains, may be disposed in the same or different chips/modules, etc.

In some embodiments, the protocol processing circuitry 714 may include one or more instances of control circuitry (not shown) to provide control functions for the transmit/receive components.

A UE reception may be established by and via the antenna panels 726, RFFE 724, RF circuitry 722, receive circuitry 720, digital baseband circuitry 716, and protocol processing circuitry 714. In some embodiments, the antenna panels 726 may receive a transmission from the AN 704 by receive-beamforming signals received by a plurality of antennas/antenna elements of the one or more antenna panels 726.

A UE transmission may be established by and via the protocol processing circuitry 714, digital baseband circuitry 716, transmit circuitry 718, RF circuitry 722, RFFE 724, and antenna panels 726. In some embodiments, the transmit components of the UE 704 may apply a spatial filter to the data to be transmitted to form a transmit beam emitted by the antenna elements of the antenna panels 726.

Similar to the UE 702, the AN 704 may include a host platform 728 coupled with a modem platform 730. The host platform 728 may include application processing circuitry 732 coupled with protocol processing circuitry 734 of the modem platform 730. The modem platform may further include digital baseband circuitry 736, transmit circuitry 738, receive circuitry 740, RF circuitry 742, RFFE circuitry 744, and antenna panels 746. The components of the AN 704 may be similar to and substantially interchangeable with like-named components of the UE 702. In addition to performing data transmission/reception as described above, the components of the AN 708 may perform various logical functions that include, for example, RNC functions such as radio bearer management, uplink and downlink dynamic radio resource management, and data packet scheduling.

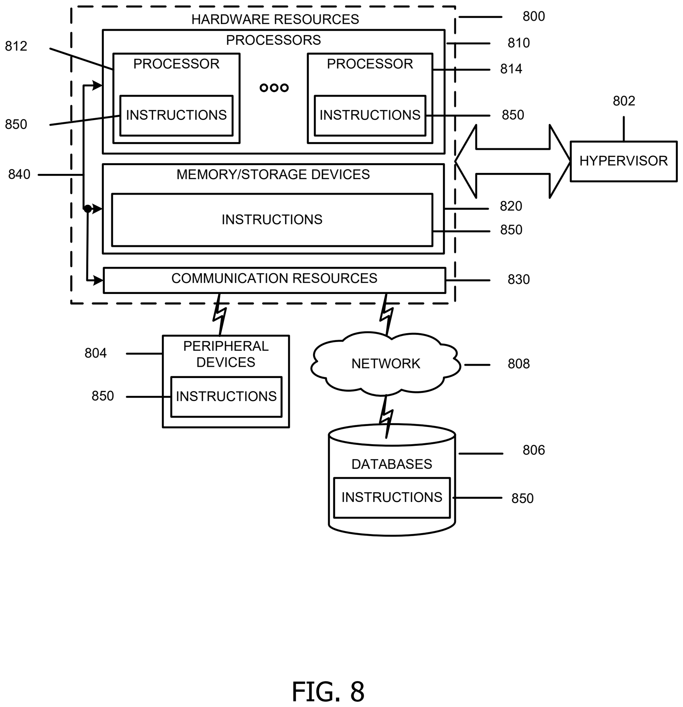

Figure 8 is a block diagram illustrating components, according to some example embodiments, able to read instructions from a machine-readable or computer-readable medium (e.g., a non-transitory machine-readable storage medium) and perform any one or more of the methodologies discussed herein. Specifically, Figure 8 shows a diagrammatic representation of hardware resources 800 including one or more processors (or processor cores) 810, one or more memory/storage devices 820, and one or more communication resources 830, each of which may be communicatively coupled via a bus 840 or other interface circuitry. For embodiments where node virtualization (e.g., NFV) is utilized, a hypervisor 802 may be executed to provide an execution environment for one or more network slices/sub-slices to utilize the hardware resources 800.

The processors 810 may include, for example, a processor 812 and a processor 814. The processors 810 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radio-frequency integrated circuit (RFIC), another processor (including those discussed herein), or any suitable combination thereof.

The memory/storage devices 820 may include main memory, disk storage, or any suitable combination thereof. The memory/storage devices 820 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 830 may include interconnection or network interface controllers, components, or other suitable devices to communicate with one or more peripheral devices 804 or one or more databases 806 or other network elements via a network 808. For example, the communication resources 830 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 850 may comprise software, a program, an application, an applet, an app, or other executable code for causing at least any of the processors 810 to perform any one or more of the methodologies discussed herein. The instructions 850 may reside, completely or partially, within at least one of the processors 810 (e.g., within the processor's cache memory), the memory/storage devices 820, or any suitable combination thereof. Furthermore, any portion of the instructions 850 may be transferred to the hardware resources 800 from any combination of the peripheral devices 804 or the databases 806. Accordingly, the memory of processors 810, the memory/storage devices 820, the peripheral devices 804, and the databases 806 are examples of computer-readable and machine-readable media.

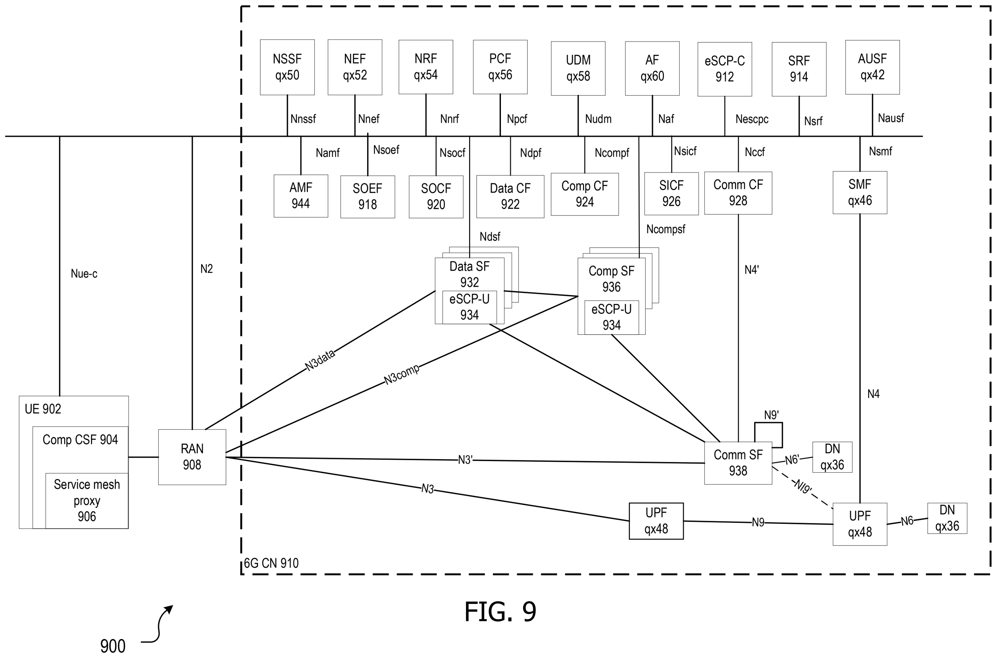

Figure 9 illustrates a network 900 in accordance with various embodiments. The network 900 may operate in a matter consistent with 3GPP technical specifications or technical reports for 6G systems. In some embodiments, the network 900 may operate concurrently with network 600. For example, in some embodiments, the network 900 may share one or more frequency or bandwidth resources with network 600. As one specific example, a UE (e.g., UE 902) may be configured to operate in both network 900 and network 600. Such configuration may be based on a UE including circuitry configured for communication with frequency and bandwidth resources of both networks 600 and 900. In general, several elements of network 900 may share one or more characteristics with elements of network 600. For the sake of brevity and clarity, such elements may not be repeated in the description of network 900.

The network 900 may include a UE 902, which may include any mobile or non-mobile computing device designed to communicate with a RAN 908 via an over-the-air connection. The UE 902 may be similar to, for example, UE 602. The UE 902 may be, but is not limited to, a smartphone, tablet computer, wearable computer device, desktop computer, laptop computer, in-vehicle infotainment, in-car entertainment device, instrument cluster, head-up display device, onboard diagnostic device, dashtop mobile equipment, mobile data terminal, electronic engine management system, electronic/engine control unit, electronic/engine control module, embedded system, sensor, microcontroller, control module, engine management system, networked appliance, machine-type communication device, M2M or D2D device, IoT device, etc.

Although not specifically shown in Figure 9, in some embodiments the network 900 may include a plurality of UEs coupled directly with one another via a sidelink interface. The UEs may be M2M/D2D devices that communicate using physical sidelink channels such as, but not limited to, PSBCH, PSDCH, PSSCH, PSCCH, PSFCH, etc. Similarly, although not specifically shown in Figure 9, the UE 902 may be communicatively coupled with an AP such as AP 606 as described with respect to Figure 6. Additionally, although not specifically shown in Figure 9, in some embodiments the RAN 908 may include one or more ANss such as AN 608 as described with respect to Figure 6. The RAN 908 and/or the AN of the RAN 908 may be referred to as a base station (BS), a RAN node, or using some other term or name.

The UE 902 and the RAN 908 may be configured to communicate via an air interface that may be referred to as a sixth generation (6G) air interface. The 6G air interface may include one or more features such as communication in a terahertz (THz) or sub-THz bandwidth, or joint communication and sensing. As used herein, the term "joint communication and sensing" may refer to a system that allows for wireless communication as well as radar-based sensing via various types of multiplexing. As used herein, THz or sub-THz bandwidths may refer to communication in the 80 GHz and above frequency ranges. Such frequency ranges may additionally or alternatively be referred to as "millimeter wave" or "mmWave" frequency ranges.

The RAN 908 may allow for communication between the UE 902 and a 6G core network (CN) 910. Specifically, the RAN 908 may facilitate the transmission and reception of data between the UE 902 and the 6G CN 910. The 6G CN 910 may include various functions such as NSSF 650, NEF 652, NRF 654, PCF 656, UDM 658, AF 660, SMF 646, and AUSF 642. The 6G CN 910 may additional include UPF 648 and DN 636 as shown in Figure 9.

Additionally, the RAN 908 may include various additional functions that are in addition to, or alternative to, functions of a legacy cellular network such as a 4G or 5G network. Two such functions may include a Compute Control Function (Comp CF) 924 and a Compute Service Function (Comp SF) 936. The Comp CF 924 and the Comp SF 936 may be parts or functions of the Computing Service Plane. Comp CF 924 may be a control plane function that provides functionalities such as management of the Comp SF 936, computing task context generation and management (e.g., create, read, modify, delete), interaction with the underlying computing infrastructure for computing resource management, etc.. Comp SF 936 may be a user plane function that serves as the gateway to interface computing service users (such as UE 902) and computing nodes behind a Comp SF instance. Some functionalities of the Comp SF 936 may include: parse computing service data received from users to compute tasks executable by computing nodes; hold service mesh ingress gateway or service API gateway; service and charging policies enforcement; performance monitoring and telemetry collection, etc. In some embodiments, a Comp SF 936 instance may serve as the user plane gateway for a cluster of computing nodes. A Comp CF 924 instance may control one or more Comp SF 936 instances.

Two other such functions may include a Communication Control Function (Comm CF) 928 and a Communication Service Function (Comm SF) 938, which may be parts of the Communication Service Plane. The Comm CF 928 may be the control plane function for managing the Comm SF 938, communication sessions creation/configuration/releasing, and managing communication session context. The Comm SF 938 may be a user plane function for data transport. Comm CF 928 and Comm SF 938 may be considered as upgrades of SMF 646 and UPF 648, which were described with respect to a 5G system in Figure 6. The upgrades provided by the Comm CF 928 and the Comm SF 938 may enable service-aware transport. For legacy (e.g., 4G or 5G) data transport, SMF 646 and UPF 648 may still be used.

Two other such functions may include a Data Control Function (Data CF) 922 and Data Service Function (Data SF) 932 may be parts of the Data Service Plane. Data CF 922 may be a control plane function and provides functionalities such as Data SF 932 management, Data service creation/configuration/releasing, Data service context management, etc. Data SF 932 may be a user plane function and serve as the gateway between data service users (such as UE 902 and the various functions of the 6G CN 910) and data service endpoints behind the gateway. Specific functionalities may include include: parse data service user data and forward to corresponding data service endpoints, generate charging data, report data service status.

Another such function may be the Service Orchestration and Chaining Function (SOCF) 920, which may discover, orchestrate and chain up communication/computing/data services provided by functions in the network. Upon receiving service requests from users, SOCF 920 may interact with one or more of Comp CF 924, Comm CF 928, and Data CF 922 to identify Comp SF 936, Comm SF 938, and Data SF 932 instances, configure service resources, and generate the service chain, which could contain multiple Comp SF 936, Comm SF 938, and Data SF 932 instances and their associated computing endpoints. Workload processing and data movement may then be conducted within the generated service chain. The SOCF 920 may also responsible for maintaining, updating, and releasing a created service chain.

Another such function may be the service registration function (SRF) 914, which may act as a registry for system services provided in the user plane such as services provided by service endpoints behind Comp SF 936 and Data SF 932 gateways and services provided by the UE 902. The SRF 914 may be considered a counterpart of NRF 654, which may act as the registry for network functions.

Other such functions may include an evolved service communication proxy (eSCP) and service infrastructure control function (SICF) 926, which may provide service communication infrastructure for control plane services and user plane services. The eSCP may be related to the service communication proxy (SCP) of 5G with user plane service communication proxy capabilities being added. The eSCP is therefore expressed in two parts: eCSP-C 912 and eSCP-U 934, for control plane service communication proxy and user plane service communication proxy, respectively. The SICF 926 may control and configure eCSP instances in terms of service traffic routing policies, access rules, load balancing configurations, performance monitoring, etc.

Another such function is the AMF 944. The AMF 944 may be similar to 644, but with additional functionality. Specifically, the AMF 944 may include potential functional repartition, such as move the message forwarding functionality from the AMF 944 to the RAN 908.

Another such function is the service orchestration exposure function (SOEF) 918. The SOEF may be configured to expose service orchestration and chaining services to external users such as applications.

The UE 902 may include an additional function that is referred to as a computing client service function (comp CSF) 904. The comp CSF 904 may have both the control plane functionalities and user plane functionalities, and may interact with corresponding network side functions such as SOCF 920, Comp CF 924, Comp SF 936, Data CF 922, and/or Data SF 932 for service discovery, request/response, compute task workload exchange, etc. The Comp CSF 904 may also work with network side functions to decide on whether a computing task should be run on the UE 902, the RAN 908, and/or an element of the 6G CN 910.

The UE 902 and/or the Comp CSF 904 may include a service mesh proxy 906. The service mesh proxy 906 may act as a proxy for service-to-service communication in the user plane. Capabilities of the service mesh proxy 906 may include one or more of addressing, security, load balancing, etc.

### EXAMPLE PROCEDURES

In some embodiments, the electronic device(s), network(s), system(s), chip(s) or component(s), or portions or implementations thereof, of Figures 6-9, or some other figure herein, may be configured to perform one or more processes, techniques, or methods as described herein, or portions thereof. For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### EXAMPLES

Example 1 may include the apparatus to attach a standardized header/tag to UP packets between UE and UPF or I-UPF or gNB for in-network computing including service discovery request/response, service request/response, measurement configuration request/response or measurement report request/response.

Example 2 may include the header/tag in example 1 and/or some other example herein, wherein includes different fields as indicated in Table 2.

Example 3 may include the message formats in example 2 and/or some other example herein, wherein include service discovery request/response, service request/response, measurement configuration request/response or measurement report request/response.

Example 4 may include the fields in example 2 and/or some other example herein, wherein includes an operating mode to indicate whether the header/tag has an independent processing rule of the UP packet that carries the header/tag

Example 5 may include the UE sends the header/tag in example 2 and/or some other example herein, wherein includes a header format ID to indicate the service discovery request and FQDN to discovery the desired computing service to a UPF.

Example 6 may include the header/tag in example 5 and/or some other example herein, wherein includes a metadata field to indicate the computing and QoS requirements for the service discovery.

Example 7 may include the UPF receives a service discovery request and forwards it to the EASDF that can generate a service discovery response including the available computing services that satisfy the computing and QoS requirements.

Example 8 may include the UPF of example 7 and/or some other example herein, wherein sends the service discovery response to the UE that sends the service discovery request.

Example 9 may include the method of example 2 and/or some other example herein, wherein the header/tag of a UP packet sent from the UE includes a header format ID as computing service request and packet group ID that indicates the processing rule is applied to the subsequent UP packets that are identified by the group ID.

Example 10 may include the method of example 9 and/or some other example herein, wherein the header/tag includes the operating mode as dependent to indicate that the processing rule for the header applies to the data packets that carries the header. For example, the data shall be processed by the service function identified by the tag ID: app1.com/aiml.

Example 11 may include the method of example 2 the header/tag of a UP packet sent from the UE includes a header format ID as measurement configuration request and the metadata that indicates how the measurements are collected which includes UE IDs and performance metrics such as RTT.

Example 12 may include the header in example 11 and/or some other example herein, wherein includes whether the measurement configuration is performed once or periodically.

Example 13 may include the response of the message in example 11 and/or some other example herein, wherein shall include a measurement ID assigned to the measurement configuration that can be used to identify the measurement.

Example 14 may include the method of example 2 and/or some other example herein, wherein the header/tag of a UP packet sent from the UE includes a header format ID as measurement request and a measurement ID that indicates the previous configured measurements.

Example 15 may include the subject matter including an apparatus for a user equipment, UE, the apparatus comprising processing circuitry coupled to a storage, the processing circuitry configured to: generate a header or tag for attachment to a user plane, UP, data packet for in-network computing, wherein the header or tag comprises an operating mode information element representing whether the header or tag is independent of the UP data packet or not; instruct the UE to transmit data comprising the header or tag attached to the UP data packet.

Example 16 may include the subject matter of example 15, and may further include wherein the header or tag further comprises a header format identifier, ID, information element configured to identify the in-network computing operation, wherein the in-network computing operation comprises one of: a service discovery request, a service discovery response, a computing service request, a computing service response, a measurement configuration request, a measurement configuration response, a measurement report request, and a measurement report response.

Example 17 may include the subject matter of example 16, and may further include wherein the header format ID information element indicates the service discovery request, and wherein the header or tag further comprises: a tag ID and tag value information element indicating a fully qualified domain name, FQDN; and a metadata field indicating computing and quality of service, QoS, requirements for a corresponding service discovery.

Example 18 may include the subject matter of example 17, and may further include wherein the metadata field further indicates a location requirement for the corresponding service discovery.

Example 19 may include the subject matter of example 17 or 18, and may further include wherein the header or tag further comprises a transaction ID for identifying a request and response pair.

Example 20 may include the subject matter of example 16, and may further include wherein the header format ID information element represents a measurement request, and wherein the header or tag further comprises: a metadata field comprising a measurement ID that represents previously configured measurements.

Example 21 may include the subject matter of example 20, and may further include wherein the header or tag further comprises a tag ID and tag value information element indicating a name of a UPF that is requested to respond.

Example 22 may include the subject matter of example 20 or 21, and may further include wherein the header or tag further comprises a transaction ID for identifying a service request and a corresponding response.

Example 23 may include the subject matter of example 16, and may further include wherein the header format ID information element indicates the measurement configuration request, and wherein the header or tag further comprises a tag ID and tag value information element indicating a name of a UPF to be configured.

Example 24 may include the subject matter of example 23, and may further include wherein the header or tag further comprises a metadata field, the metadata field indicating at least one of: an original time stamp, a UE ID, a flow ID, or a measure frequency indicating whether measurements are to be collected once or periodically.

Example 25 may include the subject matter of any one of examples 15 to 24, and may further include wherein the operating mode information element represents an independent mode, wherein the independent mode indicates that the header or tag is independent of the UP data packet, such that a processing network node is to remove the header or tag from the UP data packet and process the UP data packet based on rules configured in the processing network node.

Example 26 may include the subject matter of any one of examples 15 to 24, and may further include wherein the operating mode information element represents a dependent mode, wherein the dependent mode indicates that the header or tag defines an additional processing for the UP data packet, wherein the additional processing comprises a network node processing the header or tag and performing additional operations on the UP data packet.

Example 27 may include the subject matter of example 26, and may further include wherein the in-network computing comprises computing service, and wherein the header or tag further comprises: a packet group ID information element configured to indicate that a processing rule from the header or tag is to be applied to the UP data packet and to subsequent UP packets identified by the packet group ID.

Example 28 may include the subject matter of example 27, and may further include wherein the header or tag further comprises a Tag ID and Tag value information element indicating a target service Fully Qualified Domain Name, FQDN.

Example 29 may include the subject matter of example 27 or 28, and may further include wherein the header or tag further comprises a transaction ID, and wherein subsequent UP packets carrying the same packet group ID carry the same transaction ID.

Example 30 may include the subject matter of any one of examples 15 to 29, and may further include wherein the header or tag further comprises a reference information element comprising packet routing function end points information, wherein the packet routing function end points information is Edge Application Server Discovery Function, EASDF, end points information.

Example 31 may include the subject matter of any one of examples 15 to 30, and may further include wherein the header or tag further comprises an additional data information element comprising metadata pointing to a new forwarding action rule, FAR, rule, a service function, or a computing function.

Example 32 may include the subject matter of any one of examples 15 to 31, and may further include wherein the header or tag further comprises a security key for authorization of a request or response.

Example 33 may include the subject matter of any one of examples 15 to 32, and may further include wherein the header or tag further comprises a User Equipment identifier, UE ID, for verification at a network node.

Example 34 may include the subject matter including a computer-readable medium comprising instructions which, if executed by a processor of a network function, cause the processor to: receive data comprising a header or tag attached to a user plane, UP, data packet, the header or tag being for in-network computing; wherein the header or tag comprises an operating mode information element representing whether the header or tag is independent of the UP data packet or not; in response to determining the operating mode indicates the header or tag is dependent on the UP data packet, process the header or tag and perform an additional operation on the UP data packet based on the header or tag; and in response to determining the operating mode indicates the header or tag is independent of the UP data packet, remove the header or tag from the UP data packet and process the UP data packet based on rules configured in the network function.

Example 35 may include the subject matter of example 34, and may further include wherein the instructions further cause the processor to process a reference information element in the header or tag, the reference information element comprising end point information for an Edge Application Server Discovery Function, EASDF; and forward the header or tag or information derived therefrom to the EASDF.

Example 36 may include the subject matter of example 35, and may further include wherein the instructions further cause the processor to: receive a service discovery response from the EASDF; generate a response header or tag comprising a transaction ID; and attach the response header or tag to a qualified data packet for transmission to the UE.

Example 37 may include the subject matter of example 34 or 35, and may further include wherein the additional operation comprises forwarding the UP data packet based on metadata in an additional data information element, the metadata pointing to a new forwarding action rule, FAR, rule, a specific service function, or a specific computing function.

Example 38 may include the subject matter of any one of examples 34 to 37, and may further include wherein the header or tag comprises a packet group ID information element, and wherein the instructions further cause the processor to apply a processing rule from the header or tag to subsequent UP packets identified by the packet group ID.

Example 39 may include the subject matter of any one of examples 34 to 38, and may further include wherein the header or tag further comprises a header format identifier, ID, information element representing the in-network computing operation, wherein the in-network computing operation comprises one of: a service discovery request, a service discovery response, a computing service request, a computing service response, a measurement configuration request, a measurement configuration response, a measurement report request, and a measurement report response.

Example 40 may include the subject matter of example 39, and may further include wherein the instructions further cause the processor to: in response to the header format ID information element indicating a measurement configuration request, generate a measurement configuration response comprising an allocated measurement ID; and cause transmission of the measurement configuration response to a user equipment, UE.

Example 41 may include the subject matter of example 40, and may further include wherein the measurement configuration response further comprises metadata indicating available measurements.

Example 42 may include the subject matter of example 39, and may further include wherein the header format ID information element indicates the measurement configuration request, and wherein the instructions further cause the processor to process metadata in the header or tag, the metadata indicating at least one of: an original time stamp, a UE ID, a flow ID, or a measure frequency.

Example 43 may include the subject matter of example 39, and may further include wherein the header format ID information element indicates the measurement request, and wherein the instructions further cause the processor to process metadata in the header or tag, the metadata indicating an assigned measurement ID.

Example 44 may include the subject matter of any one of examples 34 to 43, and may further include wherein the instructions further cause the processor to process a User Equipment identifier, UE ID, included in the header or tag to verify the UE ID against traffic rules configured by a Session Management Function, SMF.

Example Z01 may include an apparatus comprising means to perform one or more elements of a method described in or related to any of examples 1-44, and/or any other method or process described herein.

Example Z02 may include one or more non-transitory computer-readable media comprising instructions to cause an electronic device, upon execution of the instructions by one or more processors of the electronic device, to perform one or more elements of a method described in or related to any of examples 1-44, and/or any other method or process described herein.

Example Z03 may include an apparatus comprising logic, modules, or circuitry to perform one or more elements of a method described in or related to any of examples 1-44, and/or any other method or process described herein.

Example Z04 may include a method, technique, or process as described in or related to any of examples 1-44, and/or portions or parts thereof.

Example Z05 may include an apparatus comprising: one or more processors and one or more computer-readable media comprising instructions that, when executed by the one or more processors, cause the one or more processors to perform the method, techniques, or process as described in or related to any of examples 1-44, and/or portions thereof.

Example Z06 may include a signal as described in or related to any of examples 1-44, or portions or parts thereof.

Example Z07 may include a datagram, packet, frame, segment, protocol data unit (PDU), or message as described in or related to any of examples 1-44, and/or portions or parts thereof, or otherwise described in the present disclosure.

Example Z08 may include a signal encoded with data as described in or related to any of examples 1-44, and/or portions or parts thereof, or otherwise described in the present disclosure.

Example Z09 may include a signal encoded with a datagram, packet, frame, segment, protocol data unit (PDU), or message as described in or related to any of examples 1-44, and/or portions or parts thereof, or otherwise described in the present disclosure.

Example Z10 may include an electromagnetic signal carrying computer-readable instructions, wherein execution of the computer-readable instructions by one or more processors is to cause the one or more processors to perform the method, techniques, or process as described in or related to any of examples 1-44, and/or portions thereof.

Example Z11 may include a computer program comprising instructions, wherein execution of the program by a processing element is to cause the processing element to carry out the method, techniques, or process as described in or related to any of examples 1-44, and/or portions thereof.

Example Z12 may include a signal in a wireless network as shown and described herein.

Example Z13 may include a method of communicating in a wireless network as shown and described herein.

Example Z14 may include a system for providing wireless communication as shown and described herein.

Example Z15 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Abbreviations

Unless used differently herein, terms, definitions, and abbreviations may be consistent with terms, definitions, and abbreviations defined in 3GPP TR 21.905 v16.0.0 (2019-06). For the purposes of the present document, the following abbreviations may apply to the examples and embodiments discussed herein.

3GPP may refer to Third Generation Partnership Project. 4G may refer to Fourth Generation. 5G may refer to Fifth Generation. 5GC may refer to 5G Core network. AC may refer to Application Client. ACR may refer to Application Context Relocation. ACK may refer to Acknowledgement. ACID may refer to Application Client Identification. ADRF may refer to Analytics Data Repository Function. AF may refer to Application Function. AM may refer to Acknowledged Mode. AMBR may refer to Aggregate Maximum Bit Rate. AMF may refer to Access and Mobility Management Function. AN may refer to Access Network. AnLF may refer to Analytics Logical Function. ANR may refer to Automatic Neighbour Relation. AOA may refer to Angle of Arrival. AP may refer to Application Protocol, Antenna Port, Access Point. API may refer to Application Programming Interface. APN may refer to Access Point Name. ARP may refer to Allocation and Retention Priority. ARQ may refer to Automatic Repeat Request. AS may refer to Access Stratum. ASP may refer to Application Service Provider. ASN.1 may refer to Abstract Syntax Notation One. AUSF may refer to Authentication Server Function. AWGN may refer to Additive White Gaussian Noise. BAP may refer to Backhaul Adaptation Protocol. BCH may refer to Broadcast Channel. BER may refer to Bit Error Ratio. BFD may refer to Beam Failure Detection. BLER may refer to Block Error Rate. BPSK may refer to Binary Phase Shift Keying. BRAS may refer to Broadband Remote Access Server. BSS may refer to Business Support System. BS may refer to Base Station. BSR may refer to Buffer Status Report. BW may refer to Bandwidth. BWP may refer to Bandwidth Part. C-RNTI may refer to Cell Radio Network Temporary Identity. CA may refer to Carrier Aggregation, Certification Authority. CAPEX may refer to CAPital Expenditure. CBD may refer to Candidate Beam Detection. CBRA may refer to Contention Based Random Access. CC may refer to Component Carrier, Country Code, Cryptographic Checksum. CCA may refer to Clear Channel Assessment. CCE may refer to Control Channel Element. CCCH may refer to Common Control Channel. CE may refer to Coverage Enhancement. CDM may refer to Content Delivery Network. CDMA may refer to Code-Division Multiple Access. CDR may refer to Charging Data Request. CDR may refer to Charging Data Response. CFRA may refer to Contention Free Random Access. CG may refer to Cell Group. CGF may refer to Charging Gateway Function. CHF may refer to Charging Function. CI may refer to Cell Identity. CID may refer to Cell-ID (e.g., positioning method). CIM may refer to Common Information Model. CIR may refer to Carrier to Interference Ratio. CK may refer to Cipher Key. CM may refer to Connection Management, Conditional Mandatory. CMAS may refer to Commercial Mobile Alert Service. CMD may refer to Command. CMS may refer to Cloud Management System. CO may refer to Conditional Optional. CoMP may refer to Coordinated Multi-Point. CORESET may refer to Control Resource Set. COTS may refer to Commercial Off-The-Shelf. CP may refer to Control Plane, Cyclic Prefix, Connection Point. CPD may refer to Connection Point Descriptor. CPE may refer to Customer Premise Equipment. CPICH may refer to Common Pilot Channel. CQI may refer to Channel Quality Indicator. CPU may refer to CSI processing unit, Central Processing Unit. C/R may refer to Command/Response field bit. CRAN may refer to Cloud Radio Access Network, Cloud RAN. CRB may refer to Common Resource Block. CRC may refer to Cyclic Redundancy Check. CRI may refer to Channel-State Information Resource Indicator, CSI-RS Resource Indicator. C-RNTI may refer to Cell RNTI. CS may refer to Circuit Switched. CSCF may refer to call session control function. CSAR may refer to Cloud Service Archive. CSI may refer to Channel-State Information. CSI-IM may refer to CSI Interference Measurement. CSI-RS may refer to CSI Reference Signal. CSI-RSRP may refer to CSI reference signal received power. CSI-RSRQ may refer to CSI reference signal received quality. CSI-SINR may refer to CSI signal-to-noise and interference ratio. CSMA may refer to Carrier Sense Multiple Access. CSMA/CA may refer to CSMA with collision avoidance. CSS may refer to Common Search Space, Cell- specific Search Space. CTF may refer to Charging Trigger Function. CTS may refer to Clear-to-Send. CW may refer to Codeword. CWS may refer to Contention Window Size. D2D may refer to Device-to-Device. DC may refer to Dual Connectivity, Direct Current. DCI may refer to Downlink Control Information. DF may refer to Deployment Flavour. DL may refer to Downlink. DMTF may refer to Distributed Management Task Force. DPDK may refer to Data Plane Development Kit. DM-RS, DMRS may refer to Demodulation Reference Signal. DN may refer to Data network. DNN may refer to Data Network Name. DNAI may refer to Data Network Access Identifier. DRB may refer to Data Radio Bearer. DRS may refer to Discovery Reference Signal. DRX may refer to Discontinuous Reception. DSL may refer to Domain Specific Language. Digital Subscriber Line. DSLAM may refer to DSL Access Multiplexer. DwPTS may refer to Downlink Pilot Time Slot. E-LAN may refer to Ethernet Local Area Network. E2E may refer to End-to-End. EAS may refer to Edge Application Server. ECCA may refer to extended clear channel assessment, extended CCA. ECCE may refer to Enhanced Control Channel Element, Enhanced CCE. ED may refer to Energy Detection. EDGE may refer to Enhanced Datarates for GSM Evolution (GSM Evolution). EAS may refer to Edge Application Server. EASID may refer to Edge Application Server Identification. ECS may refer to Edge Configuration Server. ECSP may refer to Edge Computing Service Provider. EDN may refer to Edge Data Network. EEC may refer to Edge Enabler Client. EECID may refer to Edge Enabler Client Identification. EES may refer to Edge Enabler Server.

EESID may refer to Edge Enabler Server Identification. EHE may refer to Edge Hosting Environment. EGMF may refer to Exposure Governance Management Function. EGPRS may refer to Enhanced GPRS. EIR may refer to Equipment Identity Register. eLAA may refer to enhanced Licensed Assisted Access, enhanced LAA. EM may refer to Element Manager. eMBB may refer to Enhanced Mobile Broadband. EMS may refer to Element Management System. eNB may refer to evolved NodeB, E-UTRAN Node B. EN-DC may refer to E-UTRA-NR Dual Connectivity. EPC may refer to Evolved Packet Core. EPDCCH may refer to enhanced PDCCH, enhanced Physical Downlink Control Cannel. EPRE may refer to Energy per resource element. EPS may refer to Evolved Packet System. EREG may refer to enhanced REG, enhanced resource element groups. ETSI may refer to European Telecommunications Standards Institute. ETWS may refer to Earthquake and Tsunami Warning System. eUICC may refer to embedded UICC, embedded Universal Integrated Circuit Card. E-UTRA may refer to Evolved UTRA. E-UTRAN may refer to Evolved UTRAN. EV2X may refer to Enhanced V2X. F1AP may refer to F1 Application Protocol. F1-C may refer to F1 Control plane interface. F1-U may refer to F1 User plane interface. FACCH may refer to Fast Associated Control CHannel. FACCH/F may refer to Fast Associated Control Channel/Full rate. FACCH/H may refer to Fast Associated Control Channel/Half rate. FACH may refer to Forward Access Channel. FAUSCH may refer to Fast Uplink Signalling Channel. FB may refer to Functional Block. FBI may refer to Feedback Information. FCC may refer to Federal Communications Commission. FCCH may refer to Frequency Correction CHannel. FDD may refer to Frequency Division Duplex. FDM may refer to Frequency Division Multiplex. FDMA may refer to Frequency Division Multiple Access. FE may refer to Front End. FEC may refer to Forward Error Correction. FFS may refer to For Further Study. FFT may refer to Fast Fourier Transformation. feLAA may refer to further enhanced Licensed Assisted Access, further enhanced LAA. FN may refer to Frame Number. FPGA may refer to Field-Programmable Gate Array. FR may refer to Frequency Range. FQDN may refer to Fully Qualified Domain Name. G-RNTI may refer to GERAN Radio Network Temporary Identity. GERAN may refer to GSM EDGE RAN, GSM EDGE Radio Access Network. GGSN may refer to Gateway GPRS Support Node. GLONASS may refer to GLObal'naya NAvigatsionnaya Sputnikovaya Sistema (Engl.: Global Navigation Satellite System). gNB may refer to Next Generation NodeB. gNB-CU may refer to gNB-centralized unit, Next Generation NodeB centralized unit. gNB-DU may refer to gNB-distributed unit, Next Generation NodeB distributed unit. GNSS may refer to Global Navigation Satellite System. GPRS may refer to General Packet Radio Service. GPSI may refer to Generic Public Subscription Identifier. GSM may refer to Global System for Mobile Communications, Groupe Spécial Mobile. GTP may refer to GPRS Tunneling Protocol. GTP-U may refer to GPRS Tunnelling Protocol for User Plane. GTS may refer to Go To Sleep Signal (related to WUS). GUMMEI may refer to Globally Unique MME Identifier. GUTI may refer to Globally Unique Temporary UE Identity. HARQ may refer to Hybrid ARQ, Hybrid Automatic Repeat Request. HANDO may refer to Handover. HFN may refer to HyperFrame Number. HHO may refer to Hard Handover. HLR may refer to Home Location Register. HN may refer to Home Network. HO may refer to Handover. HPLMN may refer to Home Public Land Mobile Network. HSDPA may refer to High Speed Downlink Packet Access. HSN may refer to Hopping Sequence Number. HSPA may refer to High Speed Packet Access. HSS may refer to Home Subscriber Server. HSUPA may refer to High Speed Uplink Packet Access. HTTP may refer to Hyper Text Transfer Protocol. HTTPS may refer to Hyper Text Transfer Protocol Secure (https is http/1.1 over SSL, i.e. port 443). I-Block may refer to Information Block. ICCID may refer to Integrated Circuit Card Identification. IAB may refer to Integrated Access and Backhaul. ICIC may refer to Inter-Cell Interference Coordination. ID may refer to Identity, identifier. IDFT may refer to Inverse Discrete Fourier Transform. IE may refer to Information element. IBE may refer to In-Band Emission. IEEE may refer to Institute of Electrical and Electronics Engineers. IEI may refer to Information Element Identifier. IEIDL may refer to Information Element Identifier Data Length. IETF may refer to Internet Engineering Task Force. IF may refer to Infrastructure. IIOT may refer to Industrial Internet of Things. IM may refer to Interference Measurement, Intermodulation, IP Multimedia. IMC may refer to IMS Credentials. IMEI may refer to International Mobile Equipment Identity. IMGI may refer to International mobile group identity. IMPI may refer to IP Multimedia Private Identity. IMPU may refer to IP Multimedia PUblic identity. IMS may refer to IP Multimedia Subsystem. IMSI may refer to International Mobile Subscriber Identity. IoT may refer to Internet of Things. IP may refer to Internet Protocol. Ipsec may refer to IP Security, Internet Protocol Security. IP-CAN may refer to IP-Connectivity Access Network. IP-M may refer to IP Multicast. IPv4 may refer to Internet Protocol Version 4. IPv6 may refer to Internet Protocol Version 6. IR may refer to Infrared. IS may refer to In Sync. IRP may refer to Integration Reference Point. ISDN may refer to Integrated Services Digital Network. ISIM may refer to IM Services Identity Module. ISO may refer to International Organisation for Standardisation. ISP may refer to Internet Service Provider. IWF may refer to Interworking-Function. I-WLAN may refer to Interworking WLAN Constraint length of the convolutional code, USIM Individual key. kB may refer to Kilobyte (1000 bytes). kbps may refer to kilo-bits per second. Kc may refer to Ciphering key. Ki may refer to Individual subscriber authentication key. KPI may refer to Key Performance Indicator. KQI may refer to Key Quality Indicator. KSI may refer to Key Set Identifier. ksps may refer to kilo-symbols per second. KVM may refer to Kernel Virtual Machine. L1 may refer to Layer 1 (physical layer). L1-RSRP may refer to Layer 1 reference signal received power. L2 may refer to Layer 2 (data link layer). L3 may refer to Layer 3 (network layer). LAA may refer to Licensed Assisted Access. LAN may refer to Local Area Network. LADN may refer to Local Area Data Network. LBT may refer to Listen Before Talk. LCM may refer to LifeCycle Management. LCR may refer to Low Chip Rate. LCS may refer to Location Services. LCID may refer to Logical Channel ID. LI may refer to Layer Indicator. LLC may refer to Logical Link Control, Low Layer Compatibility. LMF may refer to Location Management Function. LOS may refer to Line of Sight. LPLMN may refer to Local PLMN. LPP may refer to LTE Positioning Protocol. LSB may refer to Least Significant Bit. LTE may refer to Long Term Evolution. LWA may refer to LTE-WLAN aggregation. LWIP may refer to LTE/WLAN Radio Level Integration with IPsec Tunnel. LTE may refer to Long Term Evolution. M2M may refer to Machine-to-Machine. MAC may refer to Medium Access Control (protocol layering context). MAC may refer to Message authentication code (security/encryption context). MAC-A may refer to MAC used for authentication and key agreement (TSG T WG3 context). MAC-I may refer to MAC used for data integrity of signalling messages (TSG T WG3 context). MANO may refer to Management and Orchestration. MBMS may refer to Multimedia Broadcast and Multicast Service. MBSFN may refer to Multimedia Broadcast multicast service Single Frequency Network. MCC may refer to Mobile Country Code. MCG may refer to Master Cell Group. MCOT may refer to Maximum Channel Occupancy Time. MCS may refer to Modulation and coding scheme. MDAF may refer to Management Data Analytics Function. MDAS may refer to Management Data Analytics Service. MDT may refer to Minimization of Drive Tests. ME may refer to Mobile Equipment. MeNB may refer to master eNB. MER may refer to Message Error Ratio. MGL may refer to Measurement Gap Length. MGRP may refer to Measurement Gap Repetition Period. MIB may refer to Master Information Block, Management Information Base. MIMO may refer to Multiple Input Multiple Output. MLC may refer to Mobile Location Centre. MM may refer to Mobility Management. MME may refer to Mobility Management Entity. MN may refer to Master Node. MNO may refer to Mobile Network Operator. MO may refer to Measurement Object, Mobile Originated. MPBCH may refer to MTC Physical Broadcast CHannel. MPDCCH may refer to MTC Physical Downlink Control CHannel. MPDSCH may refer to MTC Physical Downlink Shared CHannel. MPRACH may refer to MTC Physical Random Access CHannel. MPUSCH may refer to MTC Physical Uplink Shared Channel. MPLS may refer to MultiProtocol Label Switching. MS may refer to Mobile Station. MSB may refer to Most Significant Bit. MSC may refer to Mobile Switching Centre. MSI may refer to Minimum System Information, MCH Scheduling Information. MSID may refer to Mobile Station Identifier. MSIN may refer to Mobile Station Identification Number. MSISDN may refer to Mobile Subscriber ISDN Number. MT may refer to Mobile Terminated, Mobile Termination. MTC may refer to Machine-Type Communications. MTLF may refer to Model Training Logical Functions. mMTC may refer to massive MTC, massive Machine-Type Communications. MU-MIMO may refer to Multi User MIMO. MWUS may refer to MTC wake-up signal, MTC WUS. NACK may refer to Negative Acknowledgement. NAI may refer to Network Access Identifier. NAS may refer to Non-Access Stratum, Non- Access Stratum layer. NCT may refer to Network Connectivity Topology. NC-JT may refer to Non-Coherent Joint Transmission. NEC may refer to Network Capability Exposure. NE-DC may refer to NR-E-UTRA Dual Connectivity. NEF may refer to Network Exposure Function. NF may refer to Network Function. NFP may refer to Network Forwarding Path. NFPD may refer to Network Forwarding Path Descriptor. NFV may refer to Network Functions Virtualization. NFVI may refer to NFV Infrastructure. NFVO may refer to NFV Orchestrator. NG may refer to Next Generation, Next Gen. NGEN-DC may refer to NG-RAN E-UTRA-NR Dual Connectivity. NM may refer to Network Manager. NMS may refer to Network Management System. N-PoP may refer to Network Point of Presence. NMIB, may refer to N-MIB Narrowband MIB. NPBCH may refer to Narrowband Physical Broadcast CHannel. NPDCCH may refer to Narrowband Physical Downlink Control CHannel. NPDSCH may refer to Narrowband Physical Downlink Shared CHannel. NPRACH may refer to Narrowband Physical Random Access CHannel. NPUSCH may refer to Narrowband Physical Uplink Shared CHannel. NPSS may refer to Narrowband Primary Synchronization Signal. NSSS may refer to Narrowband Secondary Synchronization Signal. NR may refer to New Radio, Neighbour Relation. NRF may refer to NF Repository Function. NRS may refer to Narrowband Reference Signal. NS may refer to Network Service. NSA may refer to Non-Standalone operation mode. NSD may refer to Network Service Descriptor. NSR may refer to Network Service Record. NSSAI may refer to Network Slice Selection Assistance Information. S-NNSAI may refer to Single-NSSAI. NSSF may refer to Network Slice Selection Function. NW may refer to Network. NWDAF may refer to Network Data Analytics Function. NWUS may refer to Narrowband wake-up signal, Narrowband WUS. NZP may refer to Non-Zero Power. O&M may refer to Operation and Maintenance. ODU2 may refer to Optical channel Data Unit - type 2. OFDM may refer to Orthogonal Frequency Division Multiplexing. OFDMA may refer to Orthogonal Frequency Division Multiple Access. OOB may refer to Out-of-band. OOS may refer to Out of Sync. OPEX may refer to OPerating EXpense. OSI may refer to Other System Information. OSS may refer to Operations Support System. OTA may refer to over-the-air. PAPR may refer to Peak-to-Average Power Ratio. PAR may refer to Peak to Average Ratio. PBCH may refer to Physical Broadcast Channel. PC may refer to Power Control, Personal Computer. PCC may refer to Primary Component Carrier, Primary CC. P-CSCF may refer to Proxy CSCF. PCell may refer to Primary Cell. PCI may refer to Physical Cell ID, Physical Cell Identity. PCEF may refer to Policy and Charging Enforcement Function. PCF may refer to Policy Control Function. PCRF may refer to Policy Control and Charging Rules Function. PDCP may refer to Packet Data Convergence Protocol, Packet Data Convergence Protocol layer. PDCCH may refer to Physical Downlink Control Channel. PDCP may refer to Packet Data Convergence Protocol. PDN may refer to Packet Data Network, Public Data Network. PDSCH may refer to Physical Downlink Shared Channel. PDU may refer to Protocol Data Unit. PEI may refer to Permanent Equipment Identifiers. PFD may refer to Packet Flow Description. P-GW may refer to PDN Gateway. PHICH may refer to Physical hybrid-ARQ indicator channel. PHY may refer to Physical layer. PLMN may refer to Public Land Mobile Network. PIN may refer to Personal Identification Number. PM may refer to Performance Measurement. PMI may refer to Precoding Matrix Indicator. PNF may refer to Physical Network Function. PNFD may refer to Physical Network Function Descriptor. PNFR may refer to Physical Network Function Record. POC may refer to PTT over Cellular. PP, PTP may refer to Point-to-Point. PPP may refer to Point-to-Point Protocol. PRACH may refer to Physical RACH. PRB may refer to Physical resource block. PRG may refer to Physical resource block group. ProSe may refer to Proximity Services, Proximity-Based Service. PRS may refer to Positioning Reference Signal. PRR may refer to Packet Reception Radio. PS may refer to Packet Services. PSBCH may refer to Physical Sidelink Broadcast Channel. PSDCH may refer to Physical Sidelink Downlink Channel. PSCCH may refer to Physical Sidelink Control Channel. PSSCH may refer to Physical Sidelink Shared Channel. PSFCH physical sidelink feedback may refer to channel. PSCell may refer to Primary SCell. PSS may refer to Primary Synchronization Signal. PSTN may refer to Public Switched Telephone Network. PT-RS may refer to Phase-tracking reference signal. PTT may refer to Push-to-Talk. PUCCH may refer to Physical Uplink Control Channel. PUSCH may refer to Physical Uplink Shared Channel. QAM may refer to Quadrature Amplitude Modulation. QCI may refer to QoS class of identifier. QCL may refer to Quasi co-location. QFI may refer to QoS Flow ID, QoS Flow Identifier. QoS may refer to Quality of Service. QPSK may refer to Quadrature (Quaternary) Phase Shift Keying. 8SS may refer to Quasi-Zenith Satellite System. RA-RNTI may refer to Random Access RNTI. RAB may refer to Radio Access Bearer, Random Access Burst. RACH may refer to Random Access Channel. RADIUS may refer to Remote Authentication Dial In User Service. RAN may refer to Radio Access Network. RAND may refer to RANDom number (used for authentication). RAR may refer to Random Access Response. RAT may refer to Radio Access Technology. RAU may refer to Routing Area Update. RB may refer to Resource block, Radio Bearer. RBG may refer to Resource block group. REG may refer to Resource Element Group. Rel may refer to Release. REQ may refer to REQuest. RF may refer to Radio Frequency. RI may refer to Rank Indicator. RIV may refer to Resource indicator value. RL may refer to Radio Link. RLC may refer to Radio Link Control, Radio Link Control layer. RLC AM may refer to RLC Acknowledged Mode. RLC UM may refer to RLC Unacknowledged Mode. RLF may refer to Radio Link Failure. RLM may refer to Radio Link Monitoring. RLM-RS may refer to Reference Signal for RLM. RM may refer to Registration Management. RMC may refer to Reference Measurement Channel. RMSI may refer to Remaining MSI, Remaining Minimum System Information. RN may refer to Relay Node. RNC may refer to Radio Network Controller. RNL may refer to Radio Network Layer. RNTI may refer to Radio Network Temporary Identifier. ROHC may refer to RObust Header Compression. RRC may refer to Radio Resource Control, Radio Resource Control layer. RRM may refer to Radio Resource Management. RS may refer to Reference Signal. RSRP may refer to Reference Signal Received Power. RSRQ may refer to Reference Signal Received Quality. RSSI may refer to Received Signal Strength Indicator. RSU may refer to Road Side Unit. RSTD may refer to Reference Signal Time difference. RTP may refer to Real Time Protocol. RTS may refer to Ready-To-Send. RTT may refer to Round Trip Time. Rx may refer to Reception, Receiving, Receiver. S1AP may refer to S1 Application Protocol. S1-MME may refer to S1 for the control plane. S1-U may refer to S1 for the user plane. S-CSCF may refer to serving CSCF. S-GW may refer to Serving Gateway. S-RNTI may refer to SRNC Radio Network Temporary Identity. S-TMSI may refer to SAE Temporary Mobile Station Identifier. SA may refer to Standalone operation mode. SAE may refer to System Architecture Evolution. SAP may refer to Service Access Point. SAPD may refer to Service Access Point Descriptor. SAPI may refer to Service Access Point Identifier. SCC may refer to Secondary Component Carrier, Secondary CC. SCell may refer to Secondary Cell. SCEF may refer to Service Capability Exposure Function. SC-FDMA may refer to Single Carrier Frequency Division Multiple Access. SCG may refer to Secondary Cell Group. SCM may refer to Security Context Management. SCS may refer to Subcarrier Spacing. SCTP may refer to Stream Control Transmission Protocol. SDAP may refer to Service Data Adaptation Protocol, Service Data Adaptation Protocol layer. SDL may refer to Supplementary Downlink. SDNF may refer to Structured Data Storage Network Function. SDP may refer to Session Description Protocol. SDSF may refer to Structured Data Storage Function. SDT may refer to Small Data Transmission. SDU may refer to Service Data Unit. SEAF may refer to Security Anchor Function. SeNB may refer to secondary eNB. SEPP may refer to Security Edge Protection Proxy. SFI may refer to Slot format indication. SFTD may refer to Space-Frequency Time Diversity, SFN and frame timing difference. SFN may refer to System Frame Number. SgNB may refer to Secondary gNB. SGSN may refer to Serving GPRS Support Node. S-GW may refer to Serving Gateway. SI may refer to System Information. SI-RNTI may refer to System Information RNTI. SIB may refer to System Information Block. SIM may refer to Subscriber Identity Module. SIP may refer to Session Initiated Protocol. SiP may refer to System in Package. SL may refer to Sidelink. SLA may refer to Service Level Agreement. SM may refer to Session Management. SMF may refer to Session Management Function. SMS may refer to Short Message Service. SMSF may refer to SMS Function. SMTC may refer to SSB-based Measurement Timing Configuration. SN may refer to Secondary Node, Sequence Number. SoC may refer to System on Chip. SON may refer to Self-Organizing Network. SpCell may refer to Special Cell.

SP-CSI-RNTI may refer to Semi-Persistent CSI RNTI. SPS may refer to Semi-Persistent Scheduling. SQN may refer to Sequence number. SR may refer to Scheduling Request. SRB may refer to Signalling Radio Bearer. SRS may refer to Sounding Reference Signal. SS may refer to Synchronization Signal. SSB may refer to Synchronization Signal Block. SSID may refer to Service Set Identifier. SS/PBCH may refer to Block. SSBRI may refer to SS/PBCH Block Resource Indicator, Synchronization Signal Block Resource Indicator. SSC may refer to Session and Service Continuity. SS-RSRP may refer to Synchronization Signal based Reference Signal Received Power. SS-RSRQ may refer to Synchronization Signal based Reference Signal Received Quality. SS-SINR may refer to Synchronization Signal based Signal to Noise and Interference Ratio. SSS may refer to Secondary Synchronization Signal. SSSG may refer to Search Space Set Group. SSSIF may refer to Search Space Set Indicator. SST may refer to Slice/Service Types. SU-MIMO may refer to Single User MIMO. SUL may refer to Supplementary Uplink. TA may refer to Timing Advance, Tracking Area. TAC may refer to Tracking Area Code. TAG may refer to Timing Advance Group. TAI may refer to Tracking Area Identity. TAU may refer to Tracking Area Update. TB may refer to Transport Block. TBS may refer to Transport Block Size. TBD may refer to To Be Defined. TCI may refer to Transmission Configuration Indicator. TCP may refer to Transmission Communication Protocol. TDD may refer to Time Division Duplex. TDM may refer to Time Division Multiplexing. TDMA may refer to Time Division Multiple Access. TE may refer to Terminal Equipment. TEID may refer to Tunnel End Point Identifier. TFT may refer to Traffic Flow Template. TMSI may refer to Temporary Mobile Subscriber Identity. TNL may refer to Transport Network Layer. TPC may refer to Transmit Power Control. TPMI may refer to Transmitted Precoding Matrix Indicator. TR may refer to Technical Report. TRP, TRxP may refer to Transmission Reception Point. TRS may refer to Tracking Reference Signal. TRx may refer to Transceiver. TS may refer to Technical Specifications, Technical Standard. TTI may refer to Transmission Time Interval. Tx may refer to Transmission, Transmitting, Transmitter. U-RNTI may refer to UTRAN Radio Network Temporary Identity. UART may refer to Universal Asynchronous Receiver and Transmitter. UCI may refer to Uplink Control Information. UE may refer to User Equipment. UDM may refer to Unified Data Management. UDP may refer to User Datagram Protocol. UDSF may refer to Unstructured Data Storage Network Function. UICC may refer to Universal Integrated Circuit Card. UL may refer to Uplink. UM may refer to Unacknowledged Mode. UML may refer to Unified Modelling Language. UMTS may refer to Universal Mobile Telecommunications System. UP may refer to User Plane. UPF may refer to User Plane Function. URI may refer to Uniform Resource Identifier. URL may refer to Uniform Resource Locator. URLLC may refer to Ultra-Reliable and Low Latency. USB may refer to Universal Serial Bus. USIM may refer to Universal Subscriber Identity Module. USS may refer to UE-specific search space. UTRA may refer to UMTS Terrestrial Radio Access. UTRAN may refer to Universal Terrestrial Radio Access Network. UwPTS may refer to Uplink Pilot Time Slot. V2I may refer to Vehicle-to-Infrastruction. V2P may refer to Vehicle-to-Pedestrian. V2V may refer to Vehicle-to-Vehicle. V2X may refer to Vehicle-to-everything. VIM may refer to Virtualized Infrastructure Manager. VL may refer to Virtual Link,. VLAN may refer to Virtual LAN, Virtual Local Area Network. VM may refer to Virtual Machine. VNF may refer to Virtualized Network Function. VNFFG may refer to VNF Forwarding Graph. VNFFGD may refer to VNF Forwarding Graph Descriptor. VNFM may refer to VNF Manager. VoIP may refer to Voice-over-IP, Voice-over- Internet Protocol. VPLMN may refer to Visited Public Land Mobile Network. VPN may refer to Virtual Private Network. VRB may refer to Virtual Resource Block. WiMAX may refer to Worldwide Interoperability for Microwave Access. WLAN may refer to Wireless Local Area Network. WMAN may refer to Wireless Metropolitan Area Network. WPAN may refer to Wireless Personal Area Network. X2-C may refer to X2-Control plane. X2-U may refer to X2-User plane. XML may refer to eXtensible Markup Language. XRES may refer to EXpected user RESponse. XOR may refer to eXclusive OR. ZC may refer to Zadoff-Chu. ZP may refer to Zero Power.

### Terminology

For the purposes of the present document, the following terms and definitions are applicable to the examples and embodiments discussed herein.

The term "application" may refer to a complete and deployable package, environment to achieve a certain function in an operational environment. The term "AI/ML application" or the like may be an application that contains some AI/ML models and application-level descriptions.

The term "circuitry" as used herein refers to, is part of, or includes hardware components such as an electronic circuit, a logic circuit, a processor (shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. Processing circuitry may include one or more processing cores to execute instructions and one or more memory structures to store program and data information. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. Processing circuitry may include more hardware accelerators, which may be microprocessors, programmable processing devices, or the like. The one or more hardware accelerators may include, for example, computer vision (CV) and/or deep learning (DL) accelerators. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is
communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or link, and/or the like.

The term "information element" refers to a structural element containing one or more fields. The term "field" refers to individual contents of an information element, or a data element that contains content.

The term "SMTC" refers to an SSB-based measurement timing configuration configured by *SSB-MeasurementTimingConfiguration.* The term "SSB" refers to an SS/PBCH block.

The term "a "Primary Cell" refers to the MCG cell, operating on the primary frequency, in which the UE either performs the initial connection establishment procedure or initiates the connection re-establishment procedure. The term "Primary SCG Cell" refers to the SCG cell in which the UE performs random access when performing the Reconfiguration with Sync procedure for DC operation.

The term "Secondary Cell" refers to a cell providing additional radio resources on top of a Special Cell for a UE configured with CA. The term "Secondary Cell Group" refers to the subset of serving cells comprising the PSCell and zero or more secondary cells for a UE configured with DC.

The term "Serving Cell" refers to the primary cell for a UE in RRC_CONNECTED not configured with CA/DC there is only one serving cell comprising of the primary cell. The term "serving cell" or "serving cells" refers to the set of cells comprising the Special Cell(s) and all secondary cells for a UE in RRC_CONNECTED configured with CA/.

The term "Special Cell" refers to the PCell of the MCG or the PSCell of the SCG for DC operation; otherwise, the term "Special Cell" refers to the Pcell.

The term "machine learning" or "ML" refers to the use of computer systems implementing algorithms and/or statistical models to perform specific task(s) without using explicit instructions, but instead relying on patterns and inferences. ML algorithms build or estimate mathematical model(s) (referred to as "ML models" or the like) based on sample data (referred to as "training data," "model training information," or the like) in order to make predictions or decisions without being explicitly programmed to perform such tasks. Generally, an ML algorithm is a computer program that learns from experience with respect to some task and some performance measure, and an ML model may be any object or data structure created after an ML algorithm is trained with one or more training datasets. After training, an ML model may be used to make predictions on new datasets. Although the term "ML algorithm" refers to different concepts than the term "ML model," these terms as discussed herein may be used interchangeably for the purposes of the present disclosure.

The term "machine learning model," "ML model," or the like may also refer to ML methods and concepts used by an ML-assisted solution. An "ML-assisted solution" is a solution that addresses a specific use case using ML algorithms during operation. ML models include supervised learning (e.g., linear regression, k-nearest neighbor (KNN), decision tree algorithms, support machine vectors, Bayesian algorithm, ensemble algorithms, etc.) unsupervised learning (e.g., K-means clustering, principle component analysis (PCA), etc.), reinforcement learning (e.g., Q-learning, multi-armed bandit learning, deep RL, etc.), neural networks, and the like. Depending on the implementation a specific ML model could have many sub-models as components and the ML model may train all sub-models together. Separately trained ML models can also be chained together in an ML pipeline during inference. An "ML pipeline" is a set of functionalities, functions, or functional entities specific for an ML-assisted solution; an ML pipeline may include one or several data sources in a data pipeline, a model training pipeline, a model evaluation pipeline, and an actor. The "actor" is an entity that hosts an ML assisted solution using the output of the ML model inference). The term "ML training host" refers to an entity, such as a network function, that hosts the training of the model. The term "ML inference host" refers to an entity, such as a network function, that hosts model during inference mode (which includes both the model execution as well as any online learning if applicable). The ML-host informs the actor about the output of the ML algorithm, and the actor takes a decision for an action (an "action" is performed by an actor as a result of the output of an ML assisted solution). The term "model inference information" refers to information used as an input to the ML model for determining inference(s); the data used to train an ML model and the data used to determine inferences may overlap, however, "training data" and "inference data" refer to different concepts.

## Claims

1. An apparatus for a user equipment, UE, the apparatus comprising processing circuitry coupled to a storage, the processing circuitry configured to:
generate a header or tag for attachment to a user plane, UP, data packet for in-network computing, wherein the header or tag comprises an operating mode information element representing whether the header or tag is independent of the UP data packet or not;
instruct the UE to transmit data comprising the header or tag attached to the UP data packet.

2. The apparatus of claim 1, wherein the header or tag further comprises a header format identifier, ID, information element configured to identify the in-network computing operation, wherein the in-network computing operation comprises one of: a service discovery request, a service discovery response, a computing service request, a computing service response, a measurement configuration request, a measurement configuration response, a measurement report request, and a measurement report response.

3. The apparatus of claim 2, wherein the header format ID information element indicates the service discovery request, and wherein the header or tag further comprises: a tag ID and tag value information element indicating a fully qualified domain name, FQDN; and a metadata field indicating computing and quality of service, QoS, requirements for a corresponding service discovery.

4. The apparatus of claim 2, wherein the header format ID information element represents a measurement request, and wherein the header or tag further comprises: a metadata field comprising a measurement ID that represents previously configured measurements.

5. The apparatus of any one of claims 1 to 4, wherein the operating mode information element represents an independent mode, wherein the independent mode indicates that the header or tag is independent of the UP data packet, such that a processing network node is to remove the header or tag from the UP data packet and process the UP data packet based on rules configured in the processing network node.

6. The apparatus of any one of claims 1 to 4, wherein the operating mode information element represents a dependent mode, wherein the dependent mode indicates that the header or tag defines an additional processing for the UP data packet, wherein the additional processing comprises a network node processing the header or tag and performing additional operations on the UP data packet.

7. The apparatus of claim 6, wherein the in-network computing comprises computing service, and wherein the header or tag further comprises: a packet group ID information element configured to indicate that a processing rule from the header or tag is to be applied to the UP data packet and to subsequent UP packets identified by the packet group ID.

8. The apparatus of any one of claims 1 to 7, wherein the header or tag further comprises a reference information element comprising packet routing function end points information, wherein the packet routing function end points information is Edge Application Server Discovery Function, EASDF, end points information.

9. The apparatus of any one of claims 1 to 8, wherein the header or tag further comprises an additional data information element comprising metadata pointing to a new forwarding action rule, FAR, rule, a service function, or a computing function.

10. A computer-readable medium comprising instructions which, if executed by a processor of a network function, cause the processor to:
receive data comprising a header or tag attached to a user plane, UP, data packet, the header or tag being for in-network computing; wherein the header or tag comprises an operating mode information element representing whether the header or tag is independent of the UP data packet or not;
in response to determining the operating mode indicates the header or tag is dependent on the UP data packet, process the header or tag and perform an additional operation on the UP data packet based on the header or tag; and
in response to determining the operating mode indicates the header or tag is independent of the UP data packet, remove the header or tag from the UP data packet and process the UP data packet based on rules configured in the network function.

11. The computer-readable medium of claim 10, wherein the instructions further cause the processor to process a reference information element in the header or tag, the reference information element comprising end point information for an Edge Application Server Discovery Function, EASDF; and forward the header or tag or information derived therefrom to the EASDF.

12. The computer-readable medium of claim 10 or claim 11, wherein the additional operation comprises forwarding the UP data packet based on metadata in an additional data information element, the metadata pointing to a new forwarding action rule, FAR, rule, a specific service function, or a specific computing function.

13. The computer-readable medium of any one of claims 10 to 12, wherein the header or tag comprises a packet group ID information element, and wherein the instructions further cause the processor to apply a processing rule from the header or tag to subsequent UP packets identified by the packet group ID.

14. The computer-readable medium of any one of claims 10 to 13, wherein the header or tag further comprises a header format identifier, ID, information element representing the in-network computing operation, wherein the in-network computing operation comprises one of: a service discovery request, a service discovery response, a computing service request, a computing service response, a measurement configuration request, a measurement configuration response, a measurement report request, and a measurement report response.

15. The computer-readable medium of any one of claims 10 to 14, wherein the instructions further cause the processor to: in response to the header format ID information element indicating a measurement configuration request, generate a measurement configuration response comprising an allocated measurement ID ; and cause transmission of the measurement configuration response to a user equipment, UE.
